(19) Europäisches Patentamt
European Patent Office
Office européen des brevets

(11) **EP 2 738 635 A1**

(12) **EUROPEAN PATENT APPLICATION**
published in accordance with Art. 153(4) EPC

(43) Date of publication:
04.06.2014 Bulletin 2014/23

(51) Int Cl.:
*G05B 19/4103* (2006.01)   *G05B 19/416* (2006.01)

(21) Application number: 12819322.4

(22) Date of filing: 27.07.2012

(86) International application number:
PCT/JP2012/004799

(87) International publication number:
WO 2013/018338 (07.02.2013 Gazette 2013/06)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 29.07.2011 JP 2011167231

(71) Applicant: Shin Nippon Koki Co., Ltd.
Osaka-shi
Osaka 541-0057 (JP)

(72) Inventor: Nishibashi, Nobutaka
Osaka-shi
Osaka 541-0057 (JP)

(74) Representative: Müller-Boré & Partner
Patentanwälte PartG mbB
Friedenheimer Brücke 21
80639 München (DE)

(54) **NUMERICAL CONTROL DEVICE**

(57)     A numerical control device includes: a path local filter which locally interpolates an interpolation interval among a tool path so that a variation in a differential value at the interpolation object point becomes a continuous variation, the interpolation interval having a specific interval width before and after an interpolation object point; and a pulse interpolation unit which, when a special command which instructs deceleration or acceleration of a transfer object is inputted to a command input device, derives a reference time which proceeds per reference unit time which is shortened or extended at a degree corresponding to the deceleration instruction or the acceleration instruction according to the special command, which obtains, from an intervening variable time function, an intervening variable at each time point at every reference unit time of the derived reference time, which obtains a position coordinate corresponding to the intervening variable at each obtained time point, the position coordinate being a position coordinate on a post-local interpolation tool path in a workpiece coordinate system, which obtains a position coordinate on each transfer axis from the obtained position coordinate at each time point, and which obtains a transfer amount of a support in each transfer axis direction from the obtained position coordinate on each transfer axis, the transfer amount being a transfer amount per reference unit time of the derived reference time, and which sets the transfer amount per reference unit time as a command pulse per specific period.

FIG.2

COMMAND INPUT DEVICE — 122

STOP COMMAND INPUT DEVICE — 124
EMERGENCY STOP BUTTON — 124a
STOP SIGNAL TRANSMITTING UNIT — 124b

RESTART COMMAND INPUT DEVICE — 126
RESTART BUTTON — 126a
RESTART SIGNAL TRANSMITTING UNIT — 126b

OVERRIDE DEVICE — 128
OVERRIDE DIAL — 128a
VELOCITY MODIFICATION SIGNAL TRANSMITTING UNIT — 128b

NUMERICAL CONTROL DEVICE — 2
STORAGE UNIT — 4
OPERATION PROCESSING UNIT — 6
TOOL PATH DERIVATION UNIT — 12
SMOOTH INTERPOLATION UNIT — 14
PATH LOCAL FILTER — 16
LOCAL INTERPOLATION UNIT — 16a
ERROR CORRECTION UNIT — 16b
INTERVENING VARIABLE TIME FUNCTION DERIVATION UNIT — 18
PULSE INTERPOLATION UNIT — 22
CONTROL UNIT — 24

MONITORING UNIT — 10
MEMORY — 5

WORKPIECE SUPPORT TRANSFER UNIT — 102c
VERTICAL SUPPORT TRANSFER UNIT — 106b
FIRST HORIZONTAL SUPPORT TRANSFER UNIT — 108b
SECOND HORIZONTAL SUPPORT TRANSFER UNIT — 110b

**Description**

Technical Field

The present invention relates to a numerical control device.

Background Art

Conventionally, various machine tools are used to machine a workpiece by numerically controlling, according to a machining program (NC program), a transfer device that transfers a workpiece and a tool for machining the workpiece. Patent Document 1 described below discloses a numerical control device that performs numerical control of such a transfer device.

The numerical control device described in Patent Document 1 controls respective transfer devices by obtaining, from a machining program, a tool path expressing a variation in position coordinates of a tool in a coordinate system fixed on a workpiece as a function of an intervening variable, obtaining a transfer axis path for each transfer axis of the transfer devices from the tool path, obtaining a transfer amount on each transfer axis per reference unit time based on the transfer axis path obtained for each transfer axis, and outputting data of the obtained transfer amount as a command pulse to servomotors of the transfer devices corresponding to the respective transfer axes. In addition, the numerical control device performs block smooth interpolation and corner smooth interpolation on a transfer axis path and obtains the transfer amount on each transfer axis per reference unit time based on the transfer axis path after the smooth interpolations by pulse interpolation. In this case, the block smooth interpolation interpolates a transfer axis path with a shape that connects a large number of command points with a straight line into a smooth curve that passes through the respective command points, and the corner smooth interpolation interpolates a corner section of a transfer axis path in which variations in position coordinates suddenly differ between before and after a prescribed command point so that the corner section becomes a smooth corner.

However, with the technique described in Patent Document 1, when a transfer axis path includes unexpected abnormal data (such as noise) in which sudden differences in the variations in position coordinates occur repetitively in short intervals, it is difficult to interpolate the portion of the abnormal data in a smooth manner. In addition, when a transfer axis path includes such abnormal data and a transfer device is controlled according to the transfer axis path, an operation of the transfer device suddenly differs at a portion corresponding to the abnormal data and a mechanical shock is generated in the machine tool. Therefore, it is important to correct abnormal data in a transfer axis path which causes such mechanical shock.

In consideration thereof, Patent Document 2 below describes a numerical control device capable of solving such an issue.

The numerical control device according to Patent Document 2 uses a post-interpolation acceleration/deceleration technique. The post-interpolation acceleration/deceleration involves performing acceleration/deceleration processing on a drive command to a servomotor of each transfer axis, the drive command being a command obtained by an interpolation operation (pulse interpolation) from each transfer axis path. With the post-interpolation acceleration/deceleration, even if the abnormal data is included in a drive command obtained by pulse interpolation, the abnormal data can be corrected by subsequent acceleration/deceleration processing and generation of a mechanical shock can be suppressed. On the other hand, the post-interpolation acceleration/deceleration has a disadvantage in that errors in a machined shape of a workpiece occur. Specifically, since the post-interpolation acceleration/deceleration according to Patent Document 2 does not limit a portion of a transfer axis path to which acceleration/deceleration processing is applied, the acceleration/deceleration processing may be applied to portions of a drive command other than an abnormal data portion. Therefore, for example, in a case where the acceleration/deceleration processing is applied to a portion of the drive command for which acceleration is actually instructed by a machining program so that a processing which reduces an acceleration rate of the portion is performed or a case where the acceleration/deceleration processing is applied to a portion of the drive command for which deceleration is actually instructed by a machining program so that a processing which reduces a deceleration rate of the portion is performed, a shape error is generated with respect to a machined shape that is instructed by the machining program.

In consideration thereof, Patent Document 3 described below presents a numerical control device that performs further evolved post-interpolation acceleration/deceleration processing. This numerical control device includes a local acceleration/deceleration filter which detects an abnormal data portion remaining in a command pulse after pulse interpolation and subjects only a vicinity of the detected abnormal data portion to local acceleration/deceleration processing. With the numerical control device, a sudden variation in velocity attributable to abnormal data is alleviated by the acceleration/deceleration processing so that mechanical shock is suppressed while, at the same time, generation of errors in machined shapes is suppressed because acceleration/deceleration processing is not performed on portions other than the vicinity of the abnormal data.

Generally, a machine tool is provided with a command input device that enables input of special commands for instructing acceleration/deceleration, an emergency stop, and a restart of transfer objects (a workpiece and a tool). Special commands inputted by an operator or the like using the command input device enables acceleration/deceleration, an emergency stop, or a restart of the transfer objects to be performed separately from normal transfer of the transfer objects in accordance with the machining program. When a special command is inputted to such a command device, for example, by modifying a transfer axis path in accordance with contents of the special command in the numerical control device according to Patent Document 3, a transfer device is made to perform acceleration/deceleration, an emergency stop, or a restart of a transfer object in accordance with the special command.

However, in this case, there is a risk of a deterioration of responsiveness from input of the special command to the command input device until acceleration/deceleration, an emergency stop, or a restart of the transfer object in accordance with the special command is actually performed. Specifically, when a special command is inputted to the command input device and thereby a transfer axis path is modified, the pulse interpolation processing and the local acceleration/deceleration processing after the pulse interpolation are to be redone. Since recomputation for the processing takes time, responsiveness from input of the special command until acceleration/deceleration, an emergency stop, or a restart in accordance with the special command is actually performed deteriorates.

Patent Document 1: Japanese Patent Application Laid-open No. 2008-225825
Patent Document 2: Japanese Patent Application Laid-open No. 2010-140312
Patent Document 3: Japanese Patent Application Laid-open No. 2010-182157

Summary of the Invention

An object of the present invention is to provide, when an operation accompanied by a velocity variation in a transfer object is performed in accordance with a special command inputted to a special command device separately from normal transfer of the transfer object during machining of a workpiece in a machine tool, a numerical control device capable of improving responsiveness between a time point of input of the special command until an operation in accordance with the special command is executed while suppressing errors in machined shapes.

In order to achieve the object described above, the present inventor has conceived a technique in which, with respect to a pulse train in which an abnormal data portion is subjected to local acceleration/deceleration processing according to local acceleration/deceleration processing after pulse interpolation, a length of a unit time of the pulse train is modified in accordance with contents of a special command inputted to a command input device and, subsequently, a second pulse interpolation step for obtaining a pulse train that represents a travel amount per the modified unit time is performed to be derived a pulse train to be outputted to a servomotor for each transfer axis.

With this technique, since a pulse train for performing drive control of a servomotor for each transfer axis is obtained by modifying a length of a unit time that is common to the respective transfer axes in accordance with contents of a special command and by obtaining a travel amount per the modified unit time by a second pulse interpolation step, an operation which is accompanied by a velocity variation in a transfer object in accordance with the contents of the special command is performed in a state where a relative positional relationship among the respective transfer axes is maintained. Therefore, even if an operation which is accompanied by a velocity variation in a transfer object in accordance with the contents of the special command is performed, generation of an error in machined shapes can be suppressed. Furthermore, with this technique, since drive control of a servomotor for each transfer axis which corresponds to the special command is executed by modifying a length of the unit time of a pulse train after local acceleration/deceleration processing, complicated local acceleration/deceleration processing need not be redone in response to an input of a special command. As a result, responsiveness from input of a special command until an operation in accordance with the special command is performed can be improved.

However, with this technique, in addition to a first pulse interpolation step before local acceleration/deceleration processing, a second pulse interpolation step must be performed after modification processing of unit time in accordance with a special command. Therefore, a problem remains in terms of simplification of operation processing. In consideration thereof, the present inventor has invented the following numerical control device in order to solve such problems.

A numerical control device according to an aspect of the present invention is a numerical control device which is provided in a machine tool including a plurality of transfer devices which transfer a transfer object which is a workpiece or a tool for machining the workpiece in order to machine the workpiece, and a command input device for inputting, from the outside, a special command for instructing an operation accompanied by a velocity variation in the transfer object, the operation being performed separately from a normal transfer of the transfer object during machining of the workpiece, each transfer device having a support for supporting the transfer object and a transfer unit which transfers the transfer object by transferring the support in a specific transfer axis direction, and the numerical control device numerically controlling each transfer device by outputting a command pulse per specific period to each transfer unit, the numerical control device comprising: a storage unit which stores a machining program including a tool path in which a locus traced by the tool during machining of the workpiece is expressed as a function of a position coordinate of the tool and an intervening variable, the position coordinate of the tool being a position coordinate in a workpiece coordinate system which is fixed on the workpiece, the intervening variable being an integrated length along the locus of the tool; a tool path derivation unit which obtains the tool path from the machining program stored in the storage unit; a path local filter which assumes, as an interpolation object point, at least one command point of a certain command point and another command point among a plurality of command points included in the tool path obtained by the tool path derivation unit, the certain command point being a command point at which a variation in a primary differential value of the intervening variable of the tool path is continuous and a variation in a secondary differential value of the intervening variable of the tool path is discontinuous, the another command point being a command point at which a variation in a primary differential value of the intervening variable of the tool path is discontinuous, and which locally interpolates only an interpolation interval among the tool path so that the variation in the differential value which is discontinuous at the interpolation object point becomes a continuous variation, the interpolation interval having a specific interval width ranging before and after the interpolation object point; an intervening variable time function derivation unit which obtains an intervening variable time function expressing a variation in the intervening variable with respect to a lapse of a reference time, based on an acceleration/deceleration condition of the transfer object and a post-local interpolation tool path which is the tool path after being locally interpolated by the path local filter; a pulse interpolation unit which derives a reference time which proceeds per reference unit time based on the specific period, which obtains the intervening variable corresponding to each time point at every reference unit time of the derived reference time from the intervening variable time function obtained by the intervening variable time function derivation unit, which obtains a position coordinate corresponding to the intervening variable at each obtained time point, the position coordinate being a position coordinate on the post-local interpolation tool path in the workpiece coordinate system, which obtains, from the obtained position coordinate at each time point, a position coordinate on each transfer axis corresponding to each transfer unit, which obtains a transfer amount of the support in each transfer axis direction from the obtained position coordinate on each transfer axis, the transfer amount being a transfer amount per reference unit time of the derived reference time, and which sets the transfer amount per reference unit time as the command pulse per the specific period; and a control unit which outputs the command pulse per the specific period for each transfer axis direction to each transfer unit corresponding to each transfer axis direction, the command pulse being a command pulse obtained by the pulse interpolation unit, and which causes each transfer unit to transfer the corresponding support in accordance with the transfer amount per the specific period indicated by the outputted command pulse, wherein the pulse interpolation unit sets the reference unit time to a time equal to the specific period after startup of the machine tool and until the special command is inputted to the command input device, reduces the reference unit time by a rate in accordance with deceleration instructed by the special command when the special command instructing deceleration of the transfer object is inputted to the command input device after startup of the machine tool, and extends the reference unit time by a rate in accordance with speed-up instructed by the special command when the special command instructing speed-up of the transfer object is inputted to the command input device after startup of the machine tool.

Brief Description of the Drawings

[Fig. 1] Fig. 1 is a schematic side view of a machine tool to which a numerical control device according to an embodiment of the present invention is applied.
[Fig. 2] Fig. 2 is a functional block diagram of a numerical control device and a command input device according to an embodiment of the present invention.
[Fig. 3] Fig. 3 is a flow chart showing a numerical control process by a numerical control device according to an embodiment of the present invention.
[Fig. 4] Fig. 4 is a flow chart showing a detailed process of local interpolation among the numerical control process shown in Fig. 3.
[Fig. 5] Fig. 5 is a flow chart showing a detailed process representing a first half of reference time derivation, pulse interpolation, and pulse output to a transfer unit among the numerical control process shown in Fig. 3.
[Fig. 6] Fig. 6 is a flow chart showing a detailed process representing a second half of reference time derivation, pulse interpolation, and pulse output to a transfer unit among the numerical control process shown in Fig. 5.
[Fig. 7] Fig. 7 is a diagram for explaining an example of a method of calculating a distributed interval width.
[Fig. 8] Fig. 8 is a schematic view showing a corner section that is an object of local interpolation among a tool path.
[Fig. 9] Fig. 9 is a schematic view showing an abnormal data portion that is an object of local interpolation among a tool path.
[Fig. 10] Fig. 10 is a diagram showing a case where an interval width of an interpolation block is greater than an interpolation interval width.

[Fig. 11] Fig. 11 is a diagram showing a case where an interval width of an interpolation block is smaller than an interpolation interval width.

[Fig. 12] Fig. 12 is a diagram showing a case where an interval width of an interpolation block is smaller than an interpolation interval width.

[Fig. 13] Fig. 13 is a diagram showing a stepped velocity curve and an acceleration/deceleration curve for deriving an intervening variable time function.

[Fig. 14]Fig. 14 is a diagram showing an example of a velocity curve in a case where velocity reaches a velocity upper limit value before a target point is reached.

[Fig. 15] Fig. 15 is a diagram showing another example of a velocity curve in a case where velocity reaches a velocity upper limit value before a target point is reached.

[Fig. 16] Fig. 16 is a diagram showing an example of a velocity curve in a case where a target point is reached and velocity reaches a velocity upper limit value when acceleration is being decreased according to an allowable jerk.

[Fig. 17] Fig. 17 is a diagram showing another example of a velocity curve in a case where a target point is reached and velocity reaches a velocity upper limit value when acceleration is being decreased according to an allowable jerk.

[Fig. 18] Fig. 18 is a diagram showing yet another example of a velocity curve in a case where a target point is reached and velocity reaches a velocity upper limit value when acceleration is being decreased according to an allowable jerk.

[Fig. 19] Fig. 19 is a diagram showing an example of a velocity curve in a case where velocity does not increase to a velocity upper limit value even when an intervening variable corresponding to a target point is reached.

[Fig. 20] Fig. 20 is a diagram showing an example of a velocity curve in a case where velocity exceeds a velocity upper limit value before a target point is reached.

Embodiments of the Invention

Hereinafter, embodiments of the present invention will be described with reference to the drawings.

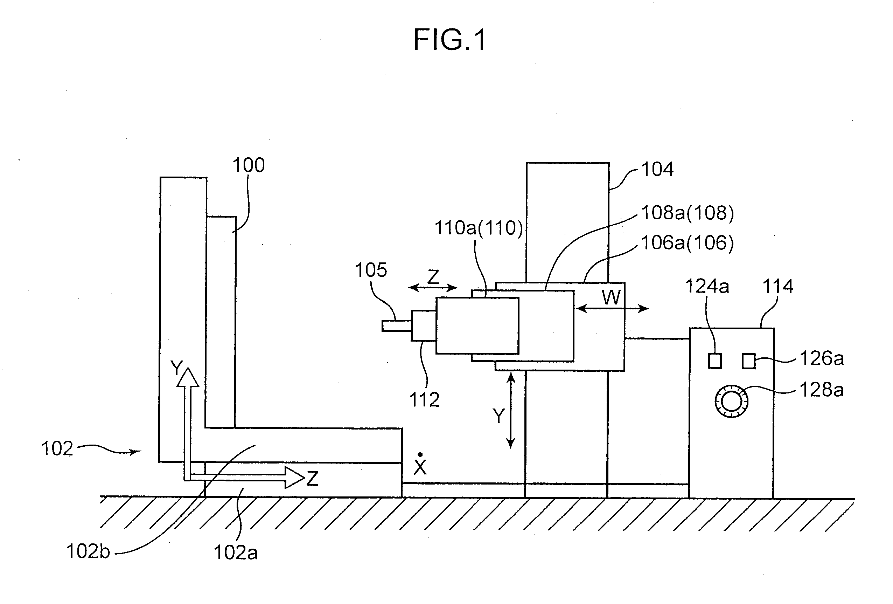

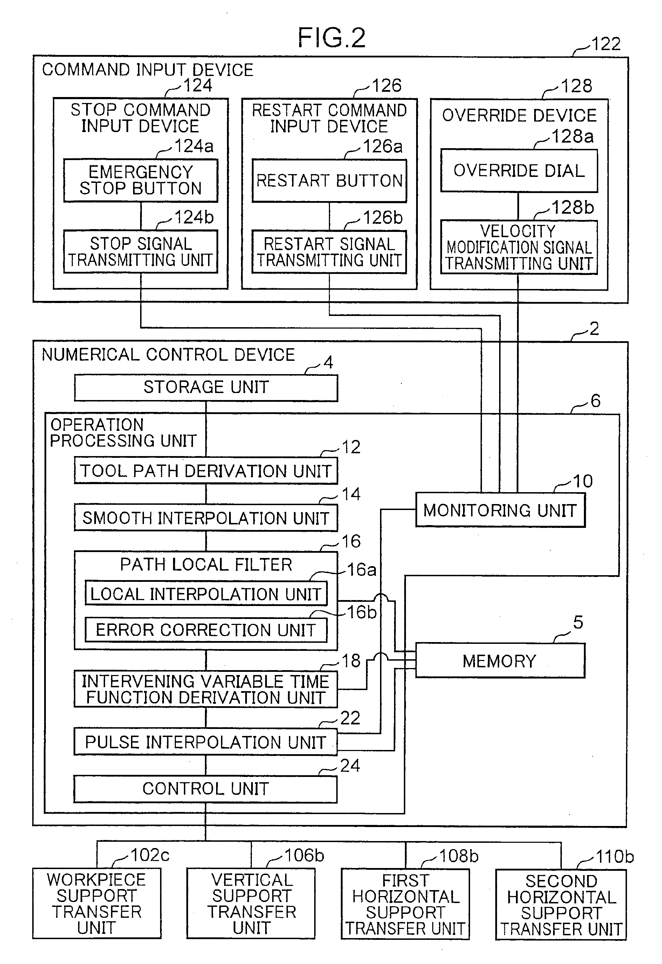

First, with reference to Figs. 1 and 2, a configuration of a machine tool to which a numerical control device 2 according to an embodiment of the present invention is applied will be described.

The machine tool is for cutting a workpiece 100 that is an object to be processed and comprises a workpiece transfer device 102, a column 104, a tool 105, a tool vertical transfer device 106, a first tool horizontal transfer device 108, a second tool horizontal transfer device 110, a main shaft head 112, and a control panel 114. Moreover, the workpiece transfer device 102, the tool vertical transfer device 106, the first tool horizontal transfer device 108, and the second tool horizontal transfer device 110 are respectively included in a concept of a transfer device according to the present invention.

The workpiece transfer device 102 is a device for transferring the workpiece 100 in a direction of an X axis that is a direction perpendicular to a paper plane in Fig. 1. The workpiece transfer device 102 includes a base 102a fixed at a prescribed installation location, a workpiece support 102b provided on the base 102a to be movable in the X direction, and a workpiece support transfer unit 102c which transfers the workpiece support 102b in the X direction (refer to Fig. 2). The workpiece support 102b supports the workpiece 100. The workpiece 100 is installed in a vertically standing state on the workpiece support 102b. The workpiece support transfer unit 102c has a servomotor as a drive source. Moreover, the X axis is included in a concept of a transfer axis according to the present invention, the workpiece support 102b is included in a concept of a support according to the present invention, and the workpiece support transfer unit 102c is included in a concept of a transfer unit according to the present invention.

The column 104 is erected at an installation location separated from the installation location of the base 102a in a horizontal direction that is perpendicular to the X axis, and extends in a vertical direction.

The tool vertical transfer device 106 is provided on the column 104 and is a device for transferring the tool 105 for cutting the workpiece 100 in a direction of a Y axis that extends in the vertical direction. The tool vertical transfer device 106 includes a vertical support 106a attached to the column 104 to be movable in the Y axis direction and a vertical support transfer unit 106b (refer to Fig. 2) which is provided on the column 104 and which transfers the vertical support 106a along the column 104 in the Y axis direction. The vertical support 106a supports the first tool horizontal transfer device 108, and since the first tool horizontal transfer device 108 supports the tool 105 via the second tool horizontal transfer device 110 and the main shaft head 112 as will be described later, the vertical support 106a indirectly supports the tool 105. The vertical support transfer unit 106b has a servomotor as a drive source. Moreover, the Y axis is included in a concept of a transfer axis according to the present invention, the vertical support 106a is included in a concept of a support according to the present invention, and the vertical support transfer unit 106b is included in a concept of a transfer unit according to the present invention.

The first tool horizontal transfer device 108 is provided on the vertical support 106a and is a device for transferring the tool 105 in a direction of a W axis which extends vertically with respect to both the X axis and the Y axis. The first tool horizontal transfer device 108 includes a first horizontal support 108a provided on the vertical support 106a to be movable in the W axis direction and a first horizontal support transfer unit 108b (refer to Fig. 2) which is provided on the vertical support 106a and which transfers the first horizontal support 108a so as to advance and retreat in the W axis direction. The first horizontal support 108a supports the second tool horizontal transfer device 110, and since the second tool horizontal transfer device 110 supports the tool 105 via the main shaft head 112 as will be described later, the first horizontal support 108a indirectly supports the tool 105. The first horizontal support transfer unit 108b has a servomotor as a drive source. Moreover, the W axis is included in a concept of a transfer axis according to the present invention, the first horizontal support 108a is included in a concept of a support according to the present invention, and the first horizontal support transfer unit 108b is included in a concept of a transfer unit according to the present invention.

The second tool horizontal transfer device 110 is provided on the first horizontal support 108a and is a device for transferring the tool 105 in a direction of a Z axis that is parallel to the W axis. The second tool horizontal transfer device 110 includes a second horizontal support 110a provided on the first horizontal support 108a to be movable in the Z axis direction and a second horizontal support transfer unit 110b which is provided on the first horizontal support 108a and which transfers the second horizontal support 110a so as to advance and retreat in the Z axis direction. The second horizontal support 110a supports the main shaft head 112 and supports the tool 105 via the main shaft head 112. The second horizontal support transfer unit 110b has a servomotor as a drive source. Moreover, the Z axis is included in a concept of a transfer axis according to the present invention, the second horizontal support 110a is included in a concept of a support according to the present invention, and the second horizontal support transfer unit 110b is included in a concept of a transfer unit according to the present invention.

The main shaft head 112 is provided on the second horizontal support 110a so that a rotational axis of the main shaft head 112 is parallel to the W axis and the Z axis. The main shaft head 112 holds the tool 105 and rotates the tool 105 around the axis of the main shaft head 112. The tool 105 cuts the workpiece 100 by being brought into contact with the workpiece 100 while being rotated by the main shaft head 112.

The control panel 114 has a function for controlling operations of the transfer units 102c, 106b, 108b, and 110b of the respective transfer devices 102, 106, 108, and 110, controlling operations of the main shaft head 112, and controlling other parts of the machine tool. The control panel 114 is electrically connected to the respective transfer units 102c, 106b, 108b, and 110b and to the drive source of the main shaft head 112.

In addition, the control panel 114 includes a command input device 122 (refer to Fig. 2). The command input device 122 is a device for inputting, from the outside, special commands for instructing operations of the workpiece 100 and the tool 105 which are accompanied by acceleration or deceleration and which are performed separately from normal transfer of the workpiece 100 and the tool 105 during machining of the workpiece 100. Hereinafter, the workpiece 100 or the tool 105 that is an object transferred by the transfer devices 102, 106, 108, and 110 will be referred to as a transfer object.

The command input device 122 includes a stop command input device 124, a restart command input device 126, and an override device 128.

The stop command input device 124 is a device for inputting an emergency stop command for urgently decelerating and stopping travel of the transfer object. The emergency stop command is included in a concept of a special command according to the present invention. The stop command input device 124 includes an emergency stop button 124a provided on an outer surface of the control panel 114 and a stop signal transmitting unit 124b that transmits an emergency stop signal to a monitoring unit 10 (to be described later) in response to the emergency stop button 124a being pressed. Moreover, in the present embodiment, pressing the emergency stop button 124a corresponds to inputting an emergency stop command.

The restart command input device 126 is a device for inputting a restart command for restarting and accelerating travel of a transfer object that has been stopped. The restart command is included in a concept of a special command according to the present invention. The restart command input device 126 includes a restart button 126a provided on the outer surface of the control panel 114 and a restart signal transmitting unit 126b that transmits a restart signal to the monitoring unit 10 (to be described later) in response to the restart button 126a being pressed. Moreover, in the present embodiment, pressing the restart button 126a corresponds to inputting a restart command.

The override device 128 is a device for inputting an acceleration command that includes an instruction for increasing a travel velocity of the transfer object and information on an acceleration rate that is a rate of increase of the travel velocity or a deceleration command that includes an instruction for decreasing the travel velocity of the transfer object and information on a deceleration rate that is a rate of decrease of the travel velocity. The acceleration command and the deceleration command are included in a concept of a special command according to the present invention.

The override device 128 includes an override dial 128a provided on the outer surface of the control panel 114 and a velocity modification signal transmitting unit 128b which transmits a velocity modification signal in accordance with an operating direction and an operating amount of the override dial 128a to the monitoring unit 10 (to be described later).

The override dial 128a is an operating unit that is operated when an operator or the like inputs an acceleration command or a deceleration command. The override dial 128a is provided on the control panel 114 to be rotatable around an axis of the override dial 128a. By rotating the override dial 128a in either direction, an acceleration command or a deceleration command can be inputted to the override device 128. In the present embodiment, an operation of rotating the override dial 128a to one side corresponds to inputting an acceleration command and an operation of rotating the override dial 128a to the other side that is a side opposite to the one side corresponds to inputting a deceleration command. In addition, an amount of rotation of the override dial 128a to the one side corresponds to an acceleration rate of the transfer object and an amount of rotation of the override dial 128a to the other side corresponds to a deceleration rate of the transfer object.

The velocity modification signal transmitting unit 128b transmits a velocity modification signal including information of an override coefficient corresponding to an amount of rotation of the override dial 128a to the one side (accelerating side) to the monitoring unit 10 in response to the override dial 128a being rotated to the one side, and transmits a velocity modification signal including information of an override coefficient corresponding to an amount of rotation of the override dial 128a to the other side (decelerating side) to the monitoring unit 10 in response to the override dial 128a being rotated to the other side. The override coefficient increases from 1 as a reference in accordance with the override dial 128a being rotated toward the accelerating side and decreases from 1 in accordance with the override dial 128a being rotated toward the decelerating side.

The numerical control device 2 according to the present embodiment is built into the control panel 114 and numerically controls the respective transfer devices 102, 106, 108, and 110 by outputting a command pulse for each specific period to the transfer units 102c, 106b, 108b, and 110b of the respective transfer devices 102, 106, 108, and 110. Next, a configuration of the numerical control device 2 according to the present embodiment will be described in detail.

As shown in Fig. 2, the numerical control device 2 includes a storage unit 4, a memory 5, and an operation processing unit 6.

The storage unit 4 stores a machining program (NC program) that is a machining command for the workpiece 100. The machining program includes a tool path. The tool path is a locus which is traced by the tool 105 during machining of the workpiece 100 and which is expressed as a function of a position coordinate of the tool 105 and an intervening variable, the position coordinate of the tool 105 being a position coordinate in a workpiece coordinate system fixed on the workpiece 100, the intervening variable being an integrated length along the locus of the tool 105. The tool path includes a large number of command points through which the tool 105 is to pass through during machining of the workpiece 100 and the tool path is constructed in a shape that connects adjacent command points among the large number of command points. In addition, the storage unit 4 stores acceleration/deceleration conditions of the transfer object during machining of the workpiece 100 as well as other setting values. Moreover, examples of acceleration/deceleration conditions include an allowable velocity, an allowable acceleration, and an allowable jerk set to each of the transfer axes by which the respective transfer devices 102, 106, 108, and 110 transfer the transfer object (each of the transfer axes by which the respective transfer units 102c, 106b, 108b, and 110b transfer corresponding supports 102b, 106a, 108a, and 110a) and a combined travel velocity of the tool 105 with respect to the workpiece 100.

The memory 5 stores information such as an override coefficient at a time point immediately preceding input of a special command to the command input device 122 and an override coefficient included in the velocity modification signal.

The operation processing unit 6 performs various operation processing and includes, as functional blocks, the monitoring unit 10, a tool path derivation unit 12, a block smooth interpolation unit 14, a path local filter 16, an intervening variable time function derivation unit 18, a pulse interpolation unit 22, and a control unit 24.

The monitoring unit 10 monitors whether or not a special command has been inputted to the command input device 122. Specifically, the monitoring unit 10 determines whether or not an emergency stop command has been inputted to the stop command input device 124, in other words, whether or not the emergency stop button 124a of the stop command input device 124 has been pressed by monitoring a presence or absence of transmission of an emergency stop signal from the stop signal transmitting unit 124b. When an emergency stop signal has been transmitted from the stop signal transmitting unit 124b, the monitoring unit 10 determines that the emergency stop button 124a has been pressed and outputs a stop request to the pulse interpolation unit 22. On the other hand, when an emergency stop signal has not been transmitted from the stop signal transmitting unit 124b, the monitoring unit 10 determines that the emergency stop button 124a has not been pressed and does not output a stop request.

In addition, the monitoring unit 10 determines whether or not a restart command has been inputted to the restart command input device 126 or, in other words, whether or not the restart button 126a of the restart command input device 126 has been pressed by monitoring a presence or absence of transmission of a restart signal from the restart signal transmitting unit 126b. When a restart signal has been transmitted from the restart signal transmitting unit 126b, the monitoring unit 10 determines that the restart button 126a has been pressed, and when a restart signal has not been transmitted from the restart signal transmitting unit 126b, the monitoring unit 10 determines that the restart button 126a has not been pressed. In addition, the monitoring unit 10 outputs a restart request to the pulse interpolation unit 22 in response to a transmission of a restart signal from the restart signal transmitting unit 126b following a transmission of an emergency stop signal from the stop signal transmitting unit 124b.

Furthermore, the monitoring unit 10 determines whether or not an acceleration command or a deceleration command has been inputted to the override device 128, in other words, whether or not the override dial 128a has been rotated by monitoring a presence or absence of transmission of a velocity modification signal from the velocity modification signal transmitting unit 128b. Specifically, the monitoring unit 10 determines that the override dial 128a has been rotated when a velocity modification signal has been transmitted from the velocity modification signal transmitting unit 128b and determines that the override dial 128a has not been rotated when a velocity modification signal has not been transmitted from the velocity modification signal transmitting unit 128b. In addition, upon receiving a velocity modification signal transmitted from the velocity modification signal transmitting unit 128b, the monitoring unit 10 outputs a velocity modification request including information of an override coefficient included in the velocity modification signal to the pulse interpolation unit 22.

The tool path derivation unit 12 reads the machining program stored in the storage unit 4 and obtains a tool path from the read machining program.

The smooth interpolation unit 14 interpolates a portion of the tool path obtained by the tool path derivation unit 12, the portion being a portion that can be interpolated into a smooth curve passing through a command point within an analytically possible range among the tool path. The interpolation performed by the smooth interpolation unit 14 is so-called block smooth interpolation in which an interval between adjacent command points among the tool path is assumed to be a command block and which is performed so that the command block and an adjacent command block are smoothly connected at a command point on a boundary between the command blocks. Specifically, the smooth interpolation unit 14 interpolates a tool path so that a primary differential value and a secondary differential value continuously vary before and after a command point on a boundary between adjacent command blocks and that the tool path passes through the command point. However, there are cases where a tool path includes a part in which a variation in a locus of the tool path with respect to a variation in an intervening variable is sudden and which cannot be interpolated by such a block smooth interpolation into a smooth curve that passes through a command point of the locus. Examples of such a part include an abnormal data portion in which increase/decrease is repeated in minute units and a corner portion that is intentionally specified by the machining program. The smooth interpolation unit 14 does not interpolate such parts among the tool path and retains the original tool path, and smoothly interpolates a portion that can be interpolated into a curve which passes through the command point and in which a primary differential value and a secondary differential value continuously vary before and after the command point.

The path local filter 16 performs interpolation by targeting parts of the tool path that have not been interpolated by the smooth interpolation unit 14. Specifically, the path local filter 16 sets a certain command point and another command point among the tool path as interpolation object points, the certain command point being a command point at which a variation in a primary differential value of the intervening variable is continuous and a variation in a secondary differential value of the intervening variable is discontinuous, the another command point being a command point at which a variation in a primary differential value of the intervening variable is discontinuous. In addition, the path local filter 16 locally interpolates only an interpolation interval of the tool path which has an interpolation interval width (to be described later) before and after an interpolation object point and in which the interpolation object point is positioned at a center of the interpolation interval width so that a variation in a differential value that is discontinuous at the interpolation object point becomes a continuous variation.

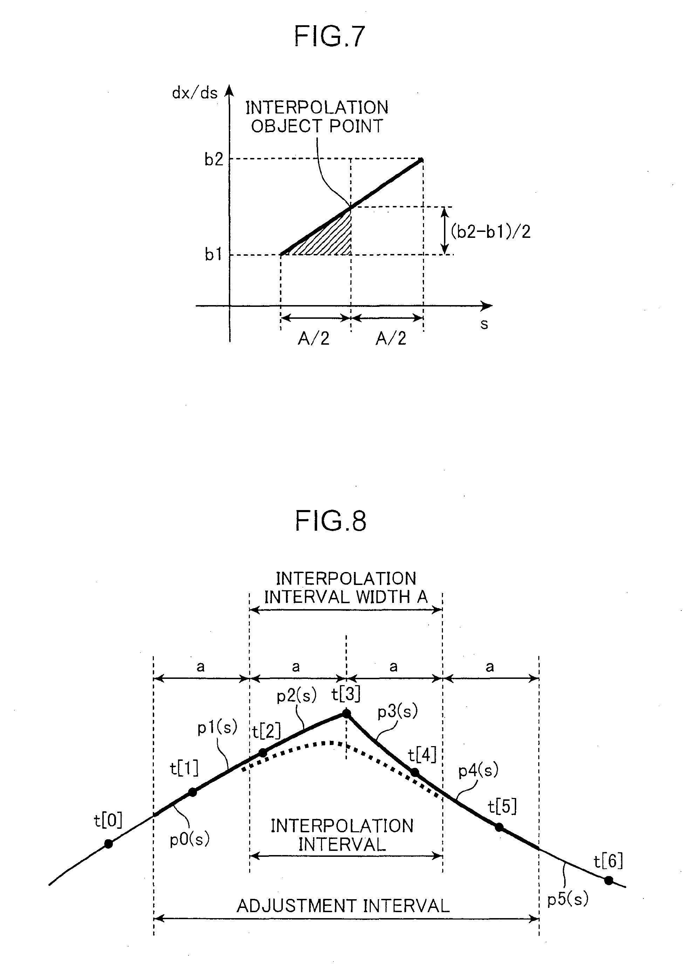

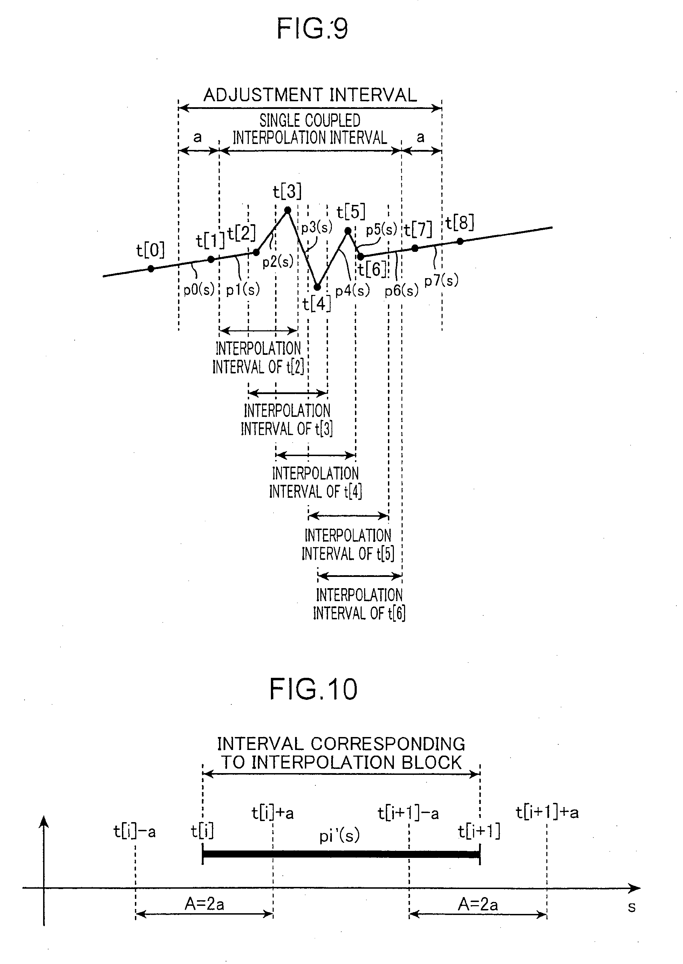

A portion of the tool path which is locally interpolated by the path local filter 16 is, for example, a corner portion such as that shown in Fig. 8 and an abnormal data portion such as that shown in Fig. 9. Since a variation in a primary differential value of the intervening variable is discontinuous at a command point (t[3] in Fig. 8) positioned at an apex of the corner position and each command point (t[2] to t[6] in Fig. 9) positioned at each apex of the abnormal data portion, these command points become interpolation object points. In addition, when a plurality of interpolation object points exist on the tool path and interpolation intervals of adjacent interpolation object points overlap each other (a case such as that shown in Fig. 9), the path local filter 16 assumes, as a single interpolation interval, a section between a start point of an interpolation interval that is positioned closest to a start point of the tool path among the overlapping interpolation intervals and an end point of an interpolation interval that is positioned closest to an end point of the tool path among the overlapping interpolation intervals and locally interpolates the tool path in the single interpolation interval. Hereinafter, a tool path after all interpolation intervals have been locally interpolated by the path local filter 16 will be referred to as a post-local interpolation tool path. Furthermore, the path local filter 16 locally interpolates the interpolation interval so that the post-local interpolation tool path is continuously connected before and after a start point and before and after an end point of each interpolation interval, respectively (when adjacent interpolation intervals overlap each other, an interpolation interval that couples the adjacent interpolation intervals with each other).

As a specific configuration of the path local filter 16, the path local filter 16 includes a local interpolation unit 16a and an error correction unit 16b as functional blocks.

The local interpolation unit 16a obtains an error-having interpolation path that is interpolated so that a variation in a differential value which is discontinuous at an interpolation object point within an interpolation interval becomes a continuous variation by performing interpolation processing on each of a plurality of interpolation blocks having a portion included in an adjustment interval that is an interpolation interval extended in both longitudinal directions to obtain a post-interpolation function of each interpolation block, integrating the post-interpolation functions to obtain a post-interpolation integrated function, and extracting an interval corresponding to an interpolation interval from the obtained post-interpolation integrated function. In addition, the error correction unit 16b corrects the error-having interpolation path obtained by the local interpolation unit 16a so that a value corresponding to a start point of the interpolation interval of the error-having interpolation path equals a value of a start point of an interpolation interval of a tool path which has not been subjected to local interpolation and that a value corresponding to an end point of the interpolation interval of the error-having interpolation path equals a value of an end point of an interpolation interval of a tool path which has not been subjected to local interpolation, and replaces the interpolation interval of the tool path with the corrected interpolation path. A detailed process of local interpolation performed by the local interpolation unit 16a and the error correction unit 16b of the path local filter 16 will be described later.

The intervening variable time function derivation unit 18 obtains an intervening variable time function (a velocity curve of an intervening variable) expressing a variation in an intervening variable with respect to a lapse of a prescribed reference time based on the acceleration/deceleration conditions stored in the storage unit 4 and the post-local interpolation tool path. Specifically, the intervening variable time function derivation unit 18 derives an intervening variable time function that represents maximum acceleration capable of moving the transfer object in accordance with the post-local interpolation tool path within a range of allowable acceleration included in the acceleration/deceleration conditions.

The pulse interpolation unit 22 performs pulse interpolation of the post-local interpolation tool path and obtains a command pulse for each specific period. The pulse interpolation unit 22 derives a reference time in accordance with an input status of a special command to the command input device 122, derives an intervening variable corresponding to the derived reference time, derives a position coordinate on the post-local interpolation tool path in accordance with the derived intervening variable, and derives a command pulse representing a variation in a position coordinate on each transfer axis per unit time in actual time. In this case, actual time refers to time which proceeds per unit time that is equal to the specific period.

Specifically, when a special command is not inputted to the command input device 122 after startup of the machine tool, the pulse interpolation unit 22 derives a reference time that proceeds per reference unit time that is equal to the unit time of the actual time (the specific period). In addition, when an emergency stop command is inputted to the stop command input device 124, the pulse interpolation unit 22 derives a reference time adjusted so that the reference unit time becomes shorter and finally becomes zero. Furthermore, when a restart command is inputted to the restart command input device 126 after an emergency stop command is inputted to the stop command input device 124, the pulse interpolation unit 22 derives a reference time adjusted so that the reference unit time becomes longer from zero and finally equals the reference unit time prior to the emergency stop. In addition, when an acceleration command is inputted to the override device 128, the pulse interpolation unit 22 derives a reference time adjusted so that the reference unit time increases from a length immediately before input of the acceleration command to the override device 128 to a length in accordance with an acceleration rate (override coefficient) included in the acceleration command. Furthermore, when a deceleration command is inputted to the override device 128, the pulse interpolation unit 22 derives a reference time adjusted so that the reference unit time decreases from a length immediately before input of the deceleration command to the override device 128 to a length in accordance with a deceleration rate (override coefficient) included in the deceleration command.

In addition, the pulse interpolation unit 22 obtains an intervening variable corresponding to each time point at every reference unit time of the reference time derived as described above from the intervening variable time function derived by the intervening variable time function derivation unit 18. Furthermore, the pulse interpolation unit 22 obtains a position coordinate on the post-local interpolation tool path in the workpiece coordinate system, the position coordinate corresponding to the intervening variable of each of the obtained time points, and obtains a travel amount of the tool 105 in the workpiece coordinate system per reference unit time of the reference time derived as described above from the obtained position coordinate at each time point. In addition, the pulse interpolation unit 22 obtains transfer amounts per reference unit time of the supports 102b, 106a, 108a, and 110a for each transfer axis of the respective transfer units 102c, 106b, 108b, and 110b from the obtained travel amount of the tool 105 and sets the transfer amount per reference unit time as a command pulse per unit time (per the specific period) of actual time. In this manner, the pulse interpolation unit 22 subjects the post-local interpolation tool path to pulse interpolation.

The control unit 24 controls operations of the respective transfer units 102c, 106b, 108b, and 110b and causes the respective transfer units 102c, 106b, 108b, and 110b to transfer the corresponding supports 102b, 106a, 108a, and 110a in accordance with the command pulse per specific period obtained by the pulse interpolation unit 22. Specifically, the control unit 24 respectively outputs the command pulse per the specific period with respect to each transfer axis to the servomotor of a corresponding transfer unit among the transfer units 102c, 106b, 108b, and 110b, the command pulse being a pulse obtained by the pulse interpolation unit 22. Accordingly, the respective transfer units 102c, 106b, 108b, and 110b transfer corresponding supports 102b, 106a, 108a, and 110a in directions of corresponding transfer axes by a transfer amount per specific period (per unit time of actual time), the transfer amount being indicated by the command pulse sent from the control unit 24. As a result, the transfer object is transferred and thereby the tool 105 is transferred along the post-local interpolation tool path in the workpiece coordinate system.

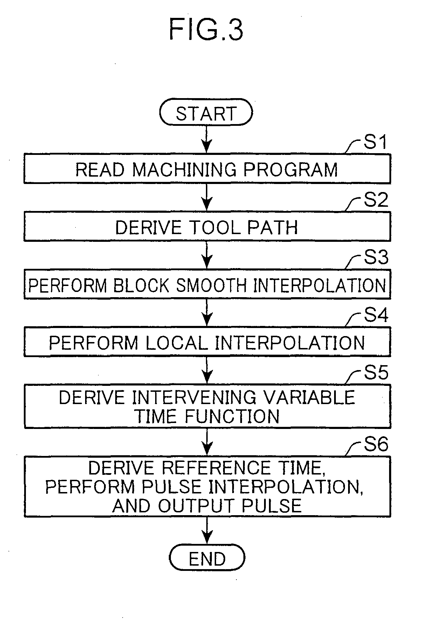

Next, a numerical control process by the numerical control device 2 according to the present embodiment will be described with reference to the flow charts shown in Figs. 3 to 5.

First, the tool path derivation unit 12 reads the machining program (NC program) stored in the storage unit 4 (step S1 in Fig. 3) and derives a tool path from the read machining program (step S3).

Next, the smooth interpolation unit 14 performs block smooth interpolation on the tool path obtained by the tool path derivation unit 12 (step S3). Specifically, the smooth interpolation unit 14 interpolates the tool path so that a primary differential value and a secondary differential value continuously vary before and after a command point on a boundary between adjacent command blocks among the tool path and that the tool path passes through the command point. In doing so, the smooth interpolation unit 14 performs block smooth interpolation on only a portion on which such interpolation is analytically possible among the tool path and retains the original tool path without performing interpolation for portions on which such interpolation is analytically impossible. Specifically, the smooth interpolation unit 14 retains the original tool path without performing interpolation for a portion in which a bending angle of the tool path at a command point is greater than a certain angle set in advance and a portion in which an error between the tool path performed block smooth interpolation and the tool path prior to interpolation is greater than an allowable error.

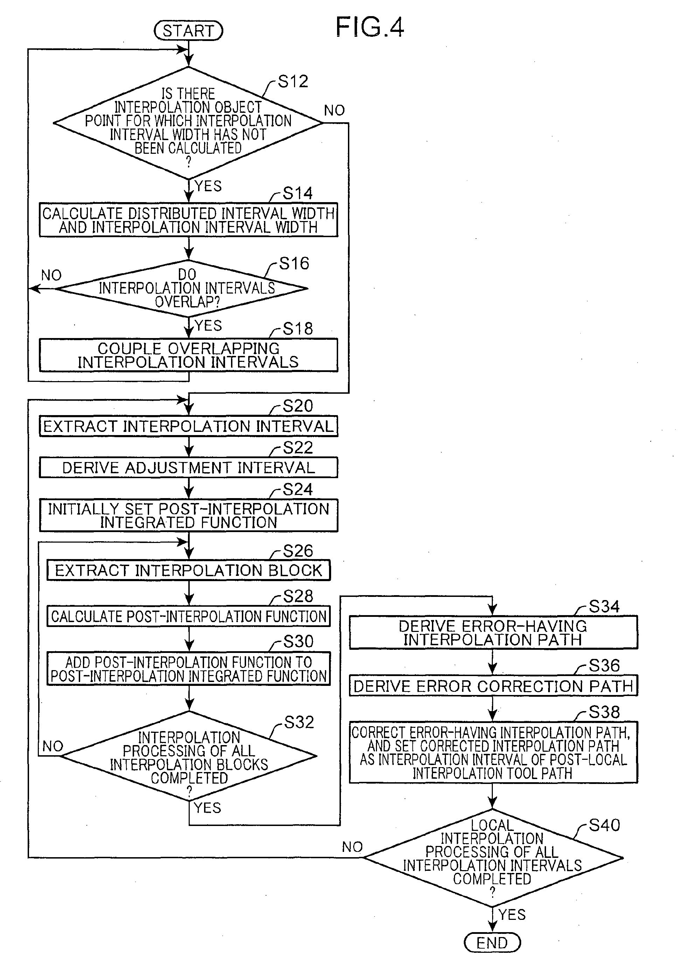

Next, the path local filter 16 locally interpolates the tool path after block smooth interpolation (step S4). Specifically, the path local filter 16 sets a certain command point and another command point among the tool path as interpolation object points, the certain command point being a command point at which a variation in a primary differential value of the intervening variable s is continuous and a variation in a secondary differential value of the intervening variable s is discontinuous, the another command point being a command point at which a variation in a primary differential value of the intervening variable s is discontinuous, and locally interpolates only an interpolation interval with a specific interval width ranging before and after the interpolation object point among the tool path. Accordingly, a vicinity of a command point not subjected to the block smooth interpolation among the tool path is locally interpolated so that a variation in a differential value that had been discontinuous at the command point becomes a continuous variation. A detailed process of the local interpolation which is performed by the path local filter 16 is shown in Fig. 4.

In the local interpolation, first, the local interpolation unit 16a of the path local filter 16 determines whether or not an interpolation object point for which an interpolation interval width that is an interval width of an interpolation interval has not been calculated exists on the tool path (step S12). When the local interpolation unit 16a determines that such an interpolation object point exists, the local interpolation unit 16a calculates a distributed interval width and an interpolation interval width of the interpolation object point for which the interpolation interval width has not been calculated (step S 14). Moreover, a distributed interval width refers to an interval width in which a primary differential value of the intervening variable of the tool path is distributed based on a distribution function (to be described later).

Specifically, the local interpolation unit 16a first calculates a distributed interval width and obtains an interpolation interval width as an interval width equal to or greater than the calculated distributed interval width. Moreover, in the present embodiment, an interpolation interval width is assumed to be an interval width that is equal in size to a distributed interval width. When primary differential values of the intervening variable s of the tool path differ before and after an interpolation object point, with respect to a coordinate axis of a workpiece coordinate system with a maximum difference between the primary differential values before and after the interpolation object point, the local interpolation unit 16a obtains a distributed interval width so as to satisfy a condition that a positional error at the interpolation object point between the tool path before local interpolation and the tool path after local interpolation equals an allowable error on the coordinate axis. More specifically, for example, a distributed interval width A is calculated as follows.

While a calculation formula for a distributed interval width differs depending on a distribution function used to perform distribution of a primary differential value of the tool path (to be described later), in this case, a distributed interval width is calculated on the assumption that a linear distribution function is to be used to perform distribution of a primary differential value of the tool path (to be described later).

Let us assume that, among the respective coordinate axes of the workpiece coordinate system, an x axis has a maximum difference between a value b1 and a value b2 of a primary differential value of the intervening variable s of the tool path, the value b1 being a value immediately before an interpolation object point, the value b2 being a value immediately after the interpolation object. In this case, a primary differential function x'(s) of the intervening variable s at a position coordinate x of the tool path on the x axis may be represented by Expression (1) below. Moreover, the primary differential function x'(s) is depicted by a bold line in Fig. 7.

$$x'(s) = dx/ds = \alpha s + b1 \ \dots \ (1)$$

A positional error at an interpolation object point of the tool path after local interpolation with respect to the tool path before local interpolation corresponds to an area of a hatched region in Fig. 7. Therefore, if the positional error is denoted by e, then the positional error e is obtained by Expression (2) below.

$$e = A \times (b2 - b1)/8 \ldots (2)$$

Now, if an allowable error on the x axis is denoted by $\tau$, then the distributed interval width A satisfying a condition that the error e is equal to the allowable error $\tau$ is obtained by Expression (3) below from Expression (2).

$$A = 8\tau/(b2 - b1) \ldots (3)$$

Moreover, when the value of the distributed interval width obtained by Expression (3) exceeds an upper limit parameter set in advance, a value of the upper limit parameter is set as the distributed interval width A. In the present embodiment, an interval width equal to the distributed interval width A calculated as described above is set as an interpolation interval width.

Next, the local interpolation unit 16a determines whether or not an interpolation interval with respect to a currently-targeted interpolation object point overlaps with an interpolation interval of another interpolation object point (step S16). At this point, if the local interpolation unit 16a determines that the interpolation intervals do not overlap each other, the local interpolation unit 16a returns to step S12 and repetitively performs subsequent processes. On the other hand, when the local interpolation unit 16a determines that the interpolation intervals overlap each other, the local interpolation unit 16a couples the overlapping interpolation intervals with each other to create a single interpolation interval (step S 18). Specifically, the local interpolation unit 16a assumes, as a single interpolation interval, an interval between a start point of an interpolation interval that is positioned closest to a start point of the tool path among the overlapping interpolation intervals and an end point of an interpolation interval that is positioned closest to an end point of the tool path among the overlapping interpolation intervals. Moreover, in this case, as the distributed interval width to be used when performing distribution (to be described later) with respect to the single coupled interpolation interval, a smallest distributed interval width among the distributed interval widths corresponding to the respective interpolation intervals is adopted. Subsequently, a return is made to step S12 and subsequent processes are repetitively performed.

When the local interpolation unit 16a determines in step S 12 that the tool path has no more interpolation object points for which an interpolation interval width has not been calculated, the local interpolation unit 16a next extracts a single interpolation interval on which subsequent local interpolation processing is to be performed (step S20). At this point, when the tool path has a plurality of interpolation intervals on which local interpolation processing has not been performed, the local interpolation unit 16a extracts an interpolation interval that is positioned closest to the start point of the tool path among the interpolation intervals. Moreover, the interpolation interval coupled in step S 18 is treated as a single interpolation interval.

Subsequently, the local interpolation unit 16a obtains an adjustment interval with respect to the extracted interpolation interval (step S22). The adjustment interval (refer to Figs. 8 and 9) is an interval created by respectively adding an interval width a, that is half of the distributed interval width A, to before and after an interpolation interval and is used as a reference when determining an interpolation block that is a calculation object of a post-interpolation function (to be described later). Subsequently, the local interpolation unit 16a initially sets the post-interpolation integrated function stored in the memory 5 to zero (step S24).

Next, the local interpolation unit 16a extracts an interpolation block that is a command block for performing interpolation processing to obtain a post-interpolation function (to be described later) (step S26). Specifically, the local interpolation unit 16a selects a plurality of command blocks (command blocks p0(s) to p5(s) in Fig. 8, and command blocks p0(s) to p7(s) in Fig. 9) having intervals which at least a part of the interval is included in the adjustment interval obtained in step S22, and extracts a block on which interpolation processing for obtaining a post-interpolation function (to be described later) has not been completed and which is positioned closest to the start point of the tool path among the command blocks as the interpolation block.

Next, the local interpolation unit 16a obtains a post-interpolation function of the extracted interpolation block (step S28). In the present embodiment, the local interpolation unit 16a obtains a post-interpolation function using a linear distribution function f(s). The linear distribution function f(s) is represented by Expression (4) below.

$$f(s) = 1/A \quad (-A/2 \leq s \leq A/2) \ldots (4)$$

Moreover, f(s) = 0 holds true outside of the distributed interval -A/2 ≤ s ≤ A/2.

When calculating a post-interpolation function, the local interpolation unit 16a first sets an integration interval [s - A/2, s + A/2] having each first position s in the extracted interpolation block as center and having an interval width equal to the distributed interval width A, each first position s being a position at which the intervening variable differs. Subsequently, the local interpolation unit 16a obtains a primary differential pi'(S) of the intervening variable of the tool path at each second position S at which the intervening variable in the set integration interval [s - A/2, s + A/2] differs, and integrates, over the integration interval [s - A/2, s + A/2], a post-distribution differential function pi'(S)·f(s - S) obtained when distributing the primary differential pi'(S) at each second position S based on the distribution function f(s) in a distributed interval having a corresponding second position S as a center and having the distributed interval width A to obtain a post-interpolation function qi'(s). In other words, the local interpolation unit 16a obtains the post-interpolation function qi'(s) of the interpolation block pi(s) according to Expression (5) below.

$$qi'(s) = \int_{S=s-A/2}^{S=s+A/2} (pi'(S) \cdot f(s-S))dS \qquad \cdots (5)$$

The post-interpolation function qi'(s) obtained in this manner is expressed differently between a case where the interval width of the interpolation block pi(s) is greater than the interpolation interval width A and a case where the interval width of the interpolation block pi(s) is smaller than the interpolation interval width A. The post-interpolation function qi'(s) in each case is as follows.

When the interval width of the interpolation block pi(s) is greater than the interpolation interval width A (= 2a) (refer to Fig. 10), if t[i] denotes a command point closer to the start point of the tool path and t[i + 1] denotes a command point closer to the end point of the tool path among the two command points that define both ends of the interpolation block pi(s) and an interval width that is half of the interpolation interval width A is denoted by a, then an interval corresponding to the interpolation block pi(s) is expressed as t[i] < s < t[i +1] and a relationship expressed as t[i] - a < t[i] + a < t[i + 1] - a < t[i + 1] + a holds true. In addition, the primary differential pi'(s) of the intervening variable s of the interpolation block pi(s) is depicted by a bold line in Fig. 10.

In this case, the post-interpolation function qi'(s) obtained by the interpolation processing is subdivided into a function qi11'(s) of an interval expressed as t[i] - a < s < t[i] + a, a function qi12'(s) of an interval expressed as t[i] + a < s < t[i + 1] - a, and a function qi13'(s) of an interval expressed as t[i + 1] - a < s < t[i + 1] + a.

The function qi11'(s) of the interval t[i] - a < s < t[i] + a is represented by Expression (6) below.

$$qi11'(s) = \int_{S=t[i]}^{S=s+a} (pi'(S) \cdot f(s-S))dS = (pi(s+a) - pi(t[i]))/2a \quad \cdots (6)$$

The function qi12'(s) of the interval t[i] + a < s < t[i + 1] - a is represented by Expression (7) below.

$$qi12'(s) = \int_{S=s-a}^{S=s+a} (pi'(S) \cdot f(s-S))dS = (pi(s+a) - pi(s-a))/2a \quad \cdots (7)$$

The function qi13'(s) of the interval t[i + 1] - a < s < t[i + 1] + a is represented by Expression (8) below.

$$qi13'(s) = \int_{S=s-a}^{S=t[i+1]} (pi'(S) \cdot f(s-S))dS = (pi(t[i+1]) - pi(s-a))/2a \\ \cdots (8)$$

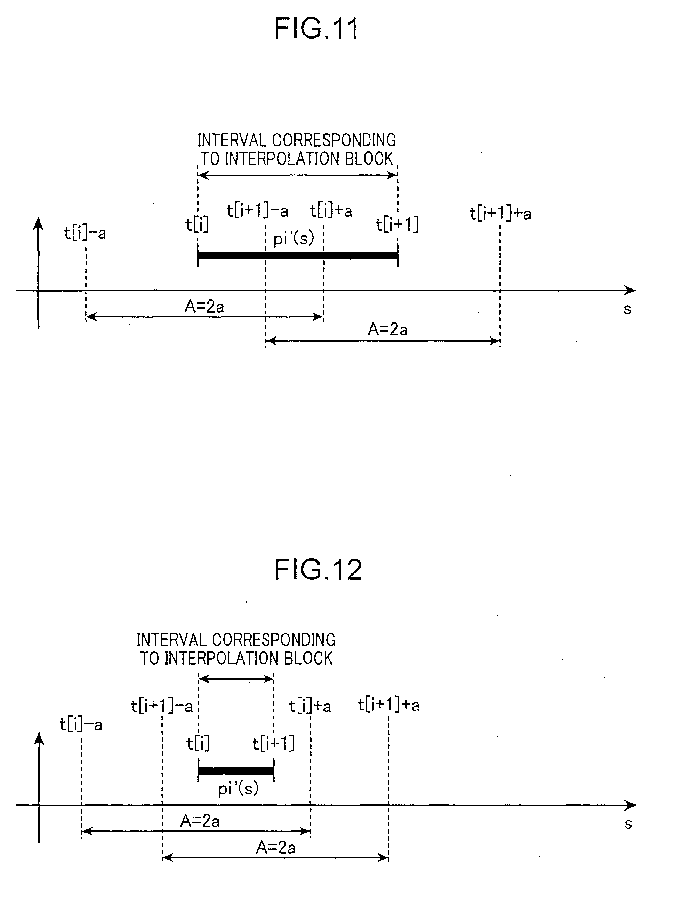

Next, when the interval width of the interpolation block pi(s) is smaller than the interpolation interval width A = 2a (refer to Figs. 11 and 12), if t[i] denotes a command point closer to the start point of the tool path and t[i + 1] denotes a command point closer to the end point of the tool path among the two command points that define both ends of the interpolation block pi(s) and an interval width that is half of the interpolation interval width A is denoted by a, then an interval corresponding to the interpolation block pi(s) is expressed as t[i] < s < t[i +1] and a relationship expressed as t[i] - a < t[i + 1] - a < t[i] + a < t[i + 1] + a holds true. The primary differential pi'(s) of the intervening variable s of the interpolation block pi(s) is depicted by bold lines in Figs. 11 and 12.

In this case, the post-interpolation function qi'(s) obtained by the interpolation processing is subdivided into a function qi21'(s) of an interval expressed as t[i] - a < s < t[i + 1] - a, a function qi22'(s) of an interval expressed as t[i + 1] - a < s < t[i] + a, and a function qi23'(s) of an interval expressed as t[i] + a < s < t[i + 1] + a.

The function qi21'(s) of the interval t[i] - a < s < t[i + 1] - a is represented by Expression (9) below.

$$qi21'(s) = \int_{S=t[i]}^{S=s+a} (pi'(S) \cdot f(s-S))dS = (pi(s+a) - pi(t[i]))/2a \quad \cdots (9)$$

The function qi22'(s) of the interval t[i + 1] - a < s < t[i] + a is represented by Expression (10) below.

$$qi22'(s) = \int_{S=t[i]}^{S=t[i+1]} (pi'(S) \cdot f(s-S))dS = (pi(t[i+1]) - pi(t[i]))/2a \quad \cdots (10)$$

The function qi23'(s) of the interval t[i] + a < s < t[i + 1] + a is represented by Expression (11) below.

$$qi23'(s) = \int_{S=s-a}^{S=t[i+1]} (pi'(S) \cdot f(s-S))dS = (pi(t[i+1]) - pi(s-a))/2a \quad \cdots (11)$$

Next, the local interpolation unit 16a adds the obtained post-interpolation function to the post-interpolation integrated function stored in the memory 5 (step S30). In this case, since the obtained post-interpolation function is added to the post-interpolation integrated function that has been reset to zero in step S42, the post-interpolation integrated function after addition is equal to the post-interpolation function obtained in step S28.

Subsequently, the local interpolation unit 16a determines whether or not interpolation processing involving obtaining a post-interpolation function and adding the post-interpolation function to the post-interpolation integrated function has been performed for all interpolation blocks having at least a part of an interval included in the adjustment interval (step S32). At this point, when the local interpolation unit 16a determines that the interpolation processing of all interpolation blocks has not yet been completed, the local interpolation unit 16a returns to step S26 and extracts an interpolation block on which interpolation processing is next performed. The interpolation block extracted at this point is a command block adjacent on a side of the end point of the tool path to an interpolation block previously subjected to interpolation processing among command blocks having at least a part of an interval included in the adjustment interval. Subsequently, the local interpolation unit 16a performs the calculation of the post-interpolation function of step S28 with respect to the extracted interpolation block and adds the obtained post-interpolation function to the post-interpolation integrated function. The local interpolation unit 16a performs the processes of steps S26 to S30 until it is determined in step S32 that the interpolation processing (distribution, integration, and addition) of all interpolation blocks having at least a part thereof included in the adjustment interval has been completed.

In addition, when the local interpolation unit 16a determines in step S32 that the interpolation processing of all interpolation blocks having at least a part thereof included in the adjustment interval has been completed, the local interpolation unit 16a next obtains an error-having interpolation path (step S34). Specifically, the local interpolation unit 16a obtains an error-having interpolation path by extracting an interval corresponding to the interpolation interval extracted in step S20 from the post-interpolation integrated function obtained by adding the post-interpolation function.

Next, the error correction unit 16b of the path local filter 16 obtains an error correction path for correcting an error from the tool path at a point corresponding to a start point of the interpolation interval and a point corresponding to an end point of the interpolation interval among the error-having interpolation path (step S36). Specifically, the error correction unit 16b obtains an error correction path satisfying a condition that a value of the error correction path at the start point of the interpolation interval is equal to a value obtained by subtracting a value of the tool path at the start point from a value of the error-having interpolation path at the start point and a value of the error correction path at the end point of the interpolation interval is equal to a value obtained by subtracting a value of the tool path at the end point from a value of the error-having interpolation path at the end point. More specifically, if the error correction path is denoted by E(s), the error-having interpolation path is denoted by r(s), the tool path is denoted by p(s), the start point of the interpolation interval is denoted by Ss, and the end point of the interpolation interval is denoted by Se, then the error correction unit 16b obtains the error correction path E(s) satisfying Expressions (12) and (13) below. In the present embodiment, the error correction unit 16b obtains an error correction path which connects E(Ss) and E(Se) by a straight line as an example of the error correction path E(s) satisfying these conditions.

$$E(Ss) = r(Ss) - p(Ss) \ldots (12)$$

$$E(Se) = r(Se) - p(Se) \ldots (13)$$

Next, the error correction unit 16b corrects the error-having interpolation path with the error correction path obtained in step S36, replaces the interpolation path after correction with the interpolation interval of the tool path, and sets the interpolation path after correction as the tool path of the interpolation interval after local interpolation (step S38). Specifically, the error correction unit 16b corrects the error-having interpolation path by subtracting the error correction path from the error-having interpolation path, and eliminates, by the correction, an error of the error-having interpolation path with respect to the tool path at the start point of the interpolation interval and an error of the error-having interpolation path with respect to the tool path at the end point of the interpolation interval. Therefore, the interpolation path after the correction becomes a path which is continuously connected to the tool path at the start point of the interpolation interval and which is continuously connected to the tool path at the end point of the interpolation interval. According to the processes described above, an interpolation interval among the tool path is locally interpolated so that a variation in a differential value that is discontinuous at an interpolation object point in the interpolation interval becomes a continuous variation.

Subsequently, the local interpolation unit 16a determines whether or not local interpolation of all interpolation intervals of the tool path has been completed (step S40). At this point, if the local interpolation unit 16a determines that there are interpolation intervals on which local interpolation has not been completed, processes of step S20 and thereafter are repetitively performed. Specifically, the local interpolation unit 16a extracts an interpolation interval positioned closest to the start point of the tool path among the interpolation intervals on which local interpolation has not been completed, and calculation of a post-interpolation function, addition to a post-interpolation integrated function, derivation of an error-having interpolation path, derivation of an error correction path, correction of an error-having interpolation path, and the like are performed.

On the other hand, when the local interpolation unit 16a determines that local interpolation of all interpolation intervals of a tool path has been completed, the process of local interpolation by the path local filter 16 is concluded, and the intervening variable time function derivation unit 18 next obtains an intervening variable time function representing a variation in the intervening variable with respect to a lapse of reference time T (step S5 in Fig. 3).

Specifically, the intervening variable time function derivation unit 18 obtains an intervening variable time function (a velocity curve of an intervening variable) based on the acceleration/deceleration conditions stored in the storage unit 4 and the post-local interpolation tool path that is a tool path after all interpolation intervals have been locally interpolated. More specifically, the intervening variable time function derivation unit 18 obtains an intervening variable time function satisfying a condition that a position of the tool 105 in the workpiece coordinate system can be moved along the post-local interpolation tool path and acceleration of the transfer object for each transfer axis does not exceed an allowable acceleration with respect to the transfer axis which is included in the acceleration/deceleration conditions. Specifically, the intervening variable time function derivation unit 18 obtains an intervening variable time function as follows.

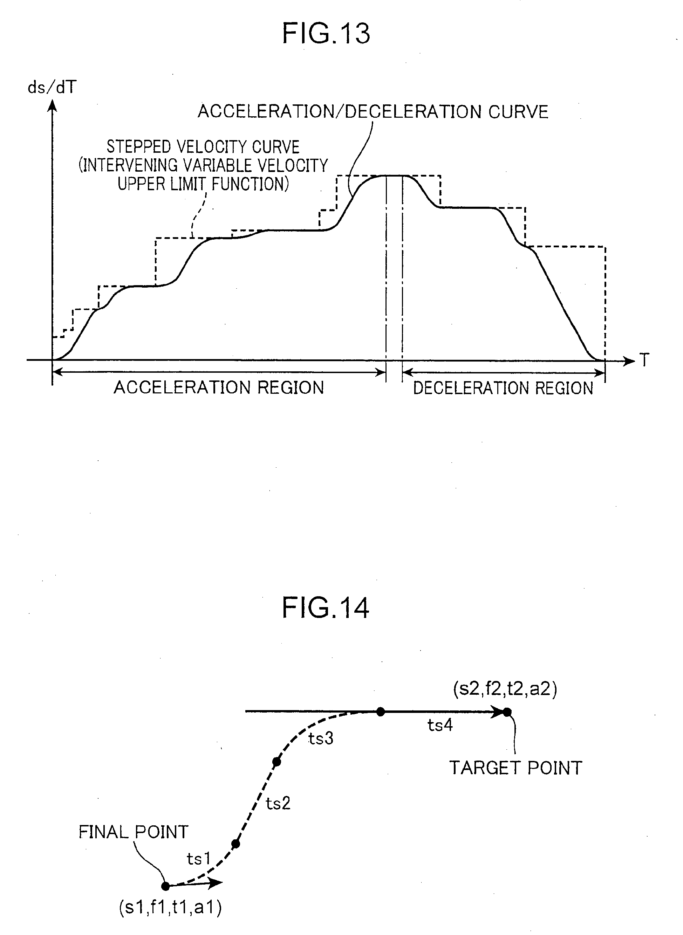

First, the intervening variable time function derivation unit 18 obtains an intervening variable velocity upper limit function that is represented by a stepped velocity curve shown in Fig. 13. The intervening variable velocity upper limit function is a function representing an upper limit value of a velocity ds/dT of the intervening variable s of each block between respective command points on each transfer axis path. Among the stepped velocity curve shown in Fig. 13, each horizontal portion represents a block and a velocity ds/dT of the portion corresponds to an upper limit value of the velocity ds/dT of the intervening variable s of the block. Moreover, while each block is originally set so that increments of the intervening variable s of the respective blocks are equal to one other, the time required to travel a distance corresponding to the increment of the intervening variable s of each block varies. In Fig. 13, an increase in the intervening variable s is converted into a passage of time t and is plotted on a horizontal axis. In addition, the intervening variable time function derivation unit 18 obtains the intervening variable velocity upper limit function by obtaining an upper limit value of the velocity ds/dT of the intervening variable s of each block as follows.

Based on the post-local interpolation tool path, the intervening variable time function derivation unit 18 obtains a transfer axis coordinate kp[i] [] (i = 0, 1, 2, 3, 4) of each transfer axis at a total of five points ($s_a$ - 2e, $s_a$ - e, $s_a$, $s_a$ + e,

$s_a + 2e)$ including a point of a prescribed intervening variable $s_a$ in a target block and two preceding points and two following points in a vicinity of the point of the prescribed intervening variable $s_a$. Moreover, e denotes a parameter representing a minute distance in the intervening variable. In addition, i = 0 corresponds to the point $(s_a - 2e)$, i = 1 corresponds to the point $(s_a - e)$, i = 2 corresponds to the point $s_a$, i = 3 corresponds to the point $(s_a + e)$, and i = 4 corresponds to the point $(s_a + 2e)$. Furthermore, [] indicates a value with respect to each transfer axis. Subsequently, the intervening variable time function derivation unit 18 obtains an approximated value ds 1[ax] of a primary differential value of the intervening variable of the transfer axis path at the point $(s_a - e)$ according to Expression (14) below, obtains an approximated value ds2 [ax] of a primary differential value of the intervening variable of the transfer axis path at the point $(s_a + e)$ according to Expression (15) below, and obtains an approximated value ddss[ax] of a secondary differential value of the intervening variable of the transfer axis path at a point corresponding to the intervening variable $s_a$ using the two obtained approximated values ds1[ax] and ds2[ax] and Expression (16) below. Moreover, ax is an index representing each transfer axis.

$$ds1[ax] = (kp[2][ax] - kp[0][ax])/2e \ldots (14)$$

$$ds2[ax] = (kp[4][ax] - kp[2][ax])/2e \ldots (15)$$

$$ddss[ax] = (ds2[ax] - ds1[ax])/2e \ldots (16)$$

Supposing that the point of the intervening variable $s_a$ is passed at a uniform velocity v, an acceleration a[] for each transfer axis can be approximated by $v^2 \times ddss[]$. Therefore, if an allowable acceleration for each transfer axis among the acceleration/deceleration conditions stored in the storage unit 4 is denoted by A[], then the intervening variable time function derivation unit 18 obtains a velocity upper limit value vm of a target block according to Expression (17) below.

$$vm = (A[ax]/ddss[ax])^{1/2} \ldots (17)$$

In addition, the intervening variable time function derivation unit 18 sets a lowest value among the velocity upper limit value vm of a corresponding block for each transfer axis obtained as described above and a velocity corresponding to the block among velocity commands included in the machining program as an upper limit of the velocity ds/dT of the intervening variable s of the block. The intervening variable time function derivation unit 18 respectively obtains an upper limit value of the velocity ds/dT of the intervening variable s of all blocks according to the method described above and obtains an intervening variable velocity upper limit function by connecting the obtained upper limit values of the respective blocks.

Next, the intervening variable time function derivation unit 18 obtains an acceleration/deceleration curve ds(T)/dT which continuously varies so as not to exceed the stepped velocity curve represented by the intervening variable velocity upper limit function based on an allowable velocity, an allowable acceleration, and an allowable jerk of the intervening variable s included in the acceleration/deceleration conditions stored in the storage unit 4, and calculates an intervening variable time function s(T) by integrating the obtained acceleration/deceleration curve ds(T)/dT by the reference time T.

Specifically, first, the intervening variable time function derivation unit 18 sequentially obtains, and resisters in the memory 5, a velocity curve (velocity function) of an acceleration region among the acceleration/deceleration curve ds(T)/dT from a start point side to an end point side for each prescribed time interval together with a time interval width ts of the time interval. At this point, the intervening variable time function derivation unit 18 obtains a velocity curve in which, during a process of reaching an end point of a block set as a target point (s2, f2) from a final point (s1, f1, t1) of a velocity curve previously registered in the memory 5, a velocity f1 at the final point may increase to an upper limit value (velocity upper limit value f2) of the velocity ds/dT of the block for each time interval together with a time interval width ts of the interval. Moreover, a form of the velocity curve obtained at this time differs according to conditions such as a difference (s2 - s1) in intervening variables between the final point and the target point, the velocity f1 at the final point, the velocity upper limit value f2, an acceleration a1 at the final point, an allowable acceleration, and an allowable jerk. Methods of obtaining a velocity curve in according to the respective conditions are shown in Figs. 14 to 20.

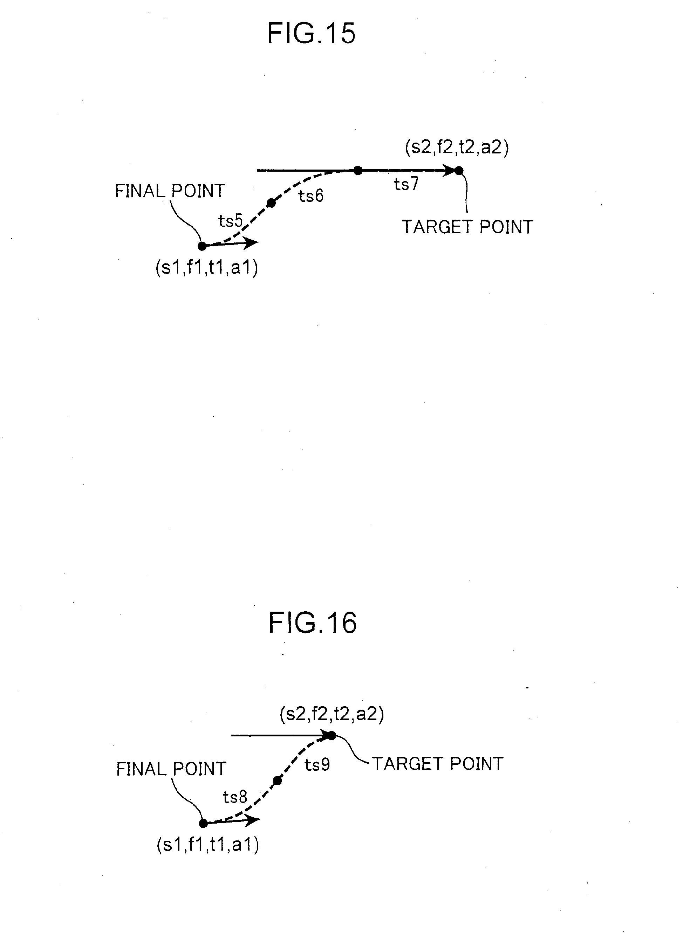

Figs. 14 and 15 show a case where the velocity reaches the velocity upper limit value f2 before reaching the target point (s2, f2) from the final point (s1, f1, t1). Moreover, t2 denotes a time upon reaching s2. Specifically, Fig. 14 shows a velocity curve with a shape in which the velocity is increased from f1 so that the acceleration increases from a1 to the allowable acceleration from the final point (s1, f1, t1) in accordance with the allowable jerk (time interval ts1), the velocity subsequently increases at an acceleration equal to the allowable acceleration (time interval ts2), the acceleration is subsequently decreased in accordance with the allowable jerk so that the velocity does not exceed the velocity upper limit value f2 and the velocity reaches the velocity upper limit value f2 (time interval ts3), and the target point (s2, f2) is subsequently reached at a velocity equal to the velocity upper limit value f2 (time interval ts4). The intervening variable time function derivation unit 18 calculates a velocity curve (velocity function) for each time interval together with a time interval width ts1 to ts4 of each interval according to such conditions and registers the calculated velocity curves together with the corresponding time intervals in the memory 5. In addition, Fig. 15 shows a velocity curve with a shape in which the velocity is increased from f1 so that the acceleration increases from a1 from the final point (s1, f1, t1) in accordance with the allowable jerk (time interval ts5), but since the velocity upper limit value f2 is close, the acceleration is decreased in accordance with the allowable jerk before the allowable acceleration is reached so that the velocity reaches the velocity upper limit value f2 (time interval ts6), and the target point (s2, f2) is subsequently reached at a velocity equal to the velocity upper limit value f2 (time interval ts7). The intervening variable time function derivation unit 18 calculates a velocity curve (velocity function) for each time interval together with a time interval width ts5 to ts7 of each interval according to such conditions and registers the calculated velocity curves together with the corresponding time intervals in the memory 5.

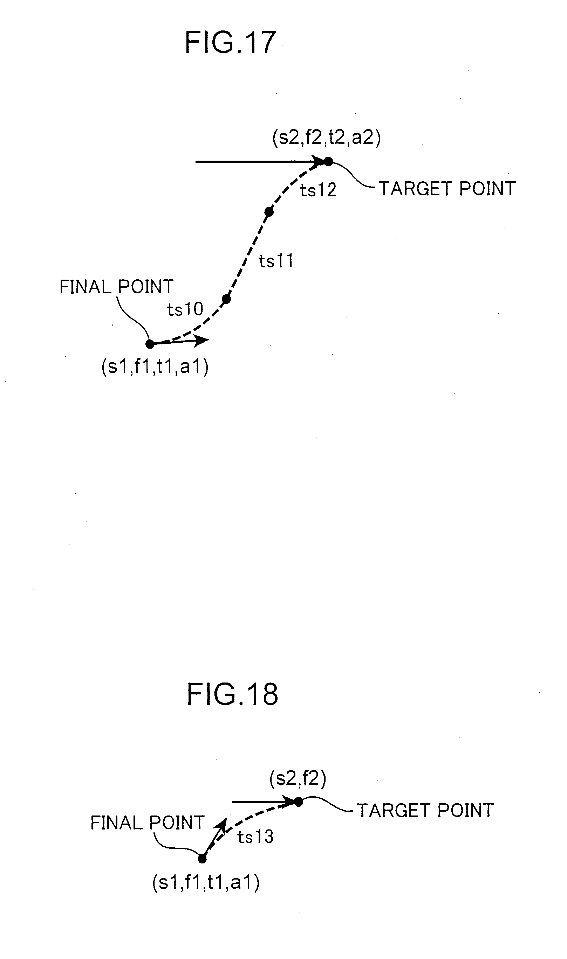

Moreover, Figs. 16 to 18 show cases where the target point (s2, f2) is reached while acceleration is decreasing in accordance with the allowable jerk. Specifically, Fig. 16 shows a velocity curve with a shape in which the velocity is increased from f1 so that the acceleration increases from a1 from the final point (s1, f1, t1) in accordance with the allowable jerk (time interval ts8), but since a distance (s2 - s1) from the final point to the target point (s2, f2) is short, the acceleration is decreased in accordance with the allowable jerk before the allowable acceleration is reached so that the velocity reaches the velocity upper limit value f2 and the target point (s2, f2) is reached (time interval ts9). The intervening variable time function derivation unit 18 calculates a velocity curve (velocity function) for each time interval together with a time interval width ts8 to ts9 of each interval according to such conditions and registers the calculated velocity curves together with the corresponding time intervals in the memory 5. In addition, Fig. 17 shows a velocity curve with a shape in which the velocity is increased from f1 so that the acceleration increases from a1 to the allowable acceleration from the final point (s1, f1, t1) in accordance with the allowable jerk (time interval ts10), the velocity subsequently increases at an acceleration equal to the allowable acceleration (time interval ts11), and the target point (s2, f2) is subsequently reached while the acceleration is being decreased in accordance with the allowable jerk so that the velocity does not exceed the velocity upper limit value f2 (time interval ts12). The intervening variable time function derivation unit 18 calculates a velocity curve (velocity function) for each time interval together with a time interval width ts 10 to ts 12 of each interval according to such conditions and registers the calculated velocity curves together with the corresponding time intervals in the memory 5. Furthermore, Fig. 18 shows a velocity curve with a shape in which, since the final point (s1, f1, t1) and the target point (s2, f2) are extremely close to each other, the velocity f1 at the final point and the velocity upper limit value f2 are extremely close to each other, and the acceleration a1 at the final point is large, the velocity increases from f1 and reaches the velocity upper limit value f2 and the target point (s2, f2) is reached while the acceleration being decreased from a1 in accordance with the allowable jerk from the final point (time interval ts13). The intervening variable time function derivation unit 18 calculates a velocity curve (velocity function) for the interval together with a time interval width ts13 according to such conditions and registers the calculated velocity curve together with the time interval ts13 in the memory 5.

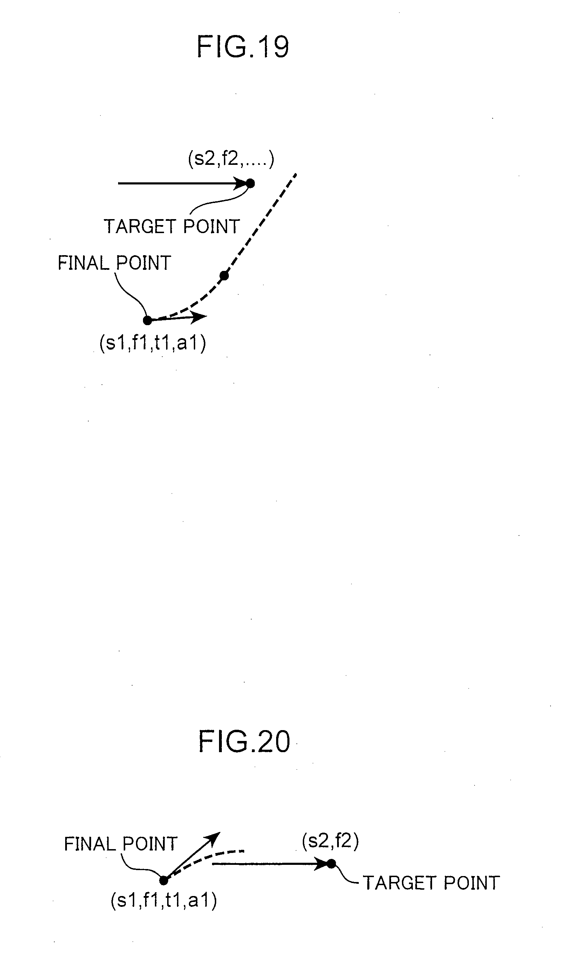

In addition, Fig. 19 shows a case where the velocity cannot be increased to velocity upper limit value f2 even when the intervening variable s reaches a value s2 that corresponds to the target point. When such a case applies upon calculation of a velocity curve by the intervening variable time function derivation unit 18, the intervening variable time function derivation unit 18 does not register the calculated velocity curve in the memory 5.

Furthermore, Fig. 20 shows a case where, since the velocity f1 at the final point (s1, f1, t1) and the velocity upper limit value f2 are extremely close to each other and the acceleration a1 at the final point is relatively large, the velocity exceeds the velocity upper limit value f2 even when the acceleration is decreased in accordance with the allowable jerk from the final point (s1, f1, t1). When such a case applies upon calculation of a velocity curve, the intervening variable time function derivation unit 18 erases data of the velocity curve last registered in the memory 5 and performs a recalculation for obtaining a velocity curve between a final point of a velocity curve registered second to last in the memory 5 and a present target point and in which the velocity may reach a velocity upper limit value corresponding to the present target point. Recalculation methods to be used in this case are similar to the methods in the respective cases described above.

In addition, the intervening variable time function derivation unit 18 sequentially performs calculation and registration of a velocity curve as described above. When registering an obtained velocity curve in the memory 5, the intervening variable time function derivation unit 18 also registers a time t2 and an acceleration a2 of the time of arrival at the target point in the memory 5, and when setting a next target point to calculate a velocity curve, the intervening variable time function derivation unit 18 calculates a next velocity curve by using the registered time t2 as time t1 at the final point and use the registered acceleration a2 as acceleration a1 at the final point. Due to a velocity curve obtained until a velocity upper limit value corresponding to a next target point becomes smaller with respect to a velocity of a final point, a velocity curve of an acceleration region among an acceleration/deceleration curve is obtained.

Next, the intervening variable time function derivation unit 18 sequentially performs calculation and registration of a velocity curve similar to those described above from an end point side toward a start point side of a path with respect to a deceleration region among an acceleration/deceleration curve, and thereby obtains a velocity curve of the deceleration region. In addition, the intervening variable time function derivation unit 18 obtains an acceleration/deceleration curve ds(T)/dT by connecting an end point of the obtained velocity curve of the acceleration region and a start point of the obtained velocity curve of the deceleration region. Furthermore, the intervening variable time function derivation unit 18 calculates an intervening variable time function s(T) by integrating the obtained acceleration/deceleration curve ds(T)/dT by reference time T.

Next, derivation of reference time T and pulse interpolation by the pulse interpolation unit 22 and pulse output to the respective transfer units 102c, 106b, 108b, and 110b by the control unit 24 are performed (step S6).

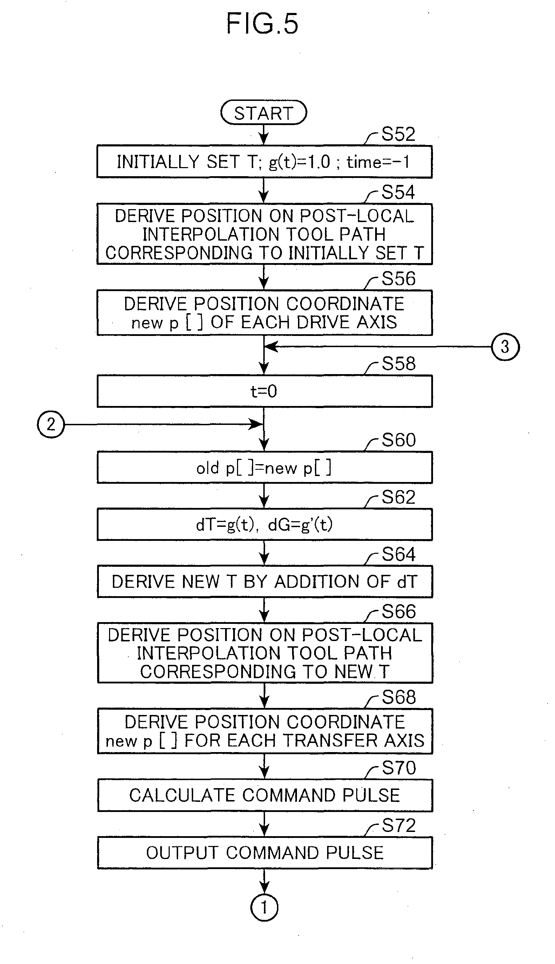

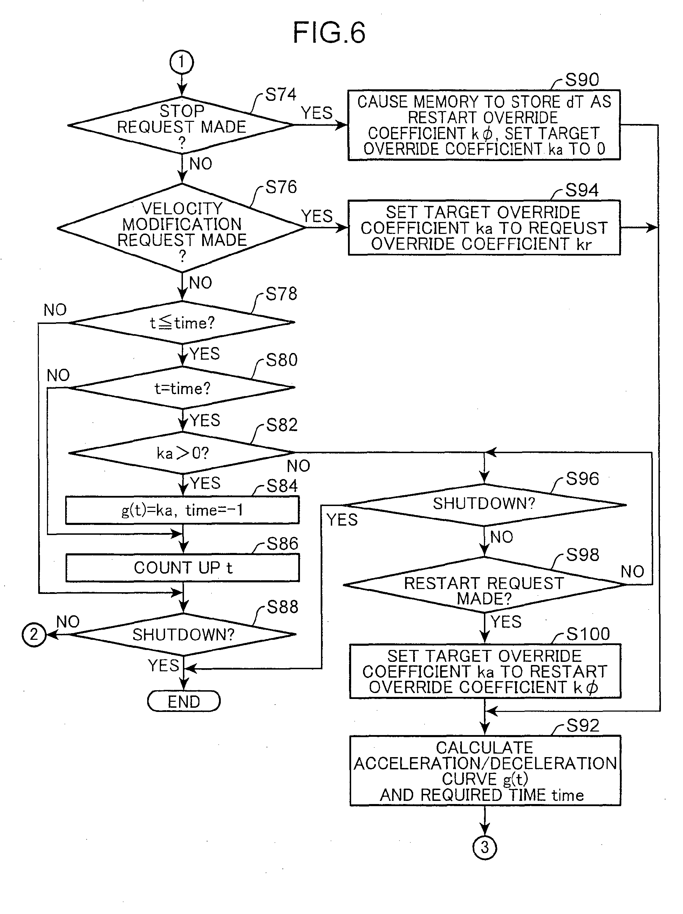

A detailed process of step S6 is shown in the flow charts of Figs. 5 and 6. In this process, first, the pulse interpolation unit 22 initially sets the reference time T so that the reference time T conforms to a time that is a start point of the intervening variable time function obtained in step S5, sets an acceleration/deceleration function g(t) representing a variation in a ratio of a unit time of the reference time (reference unit time) with respect to a unit time of actual time to 1.0 (constant) and, at the same time, sets a required time *time* (to be described later) to -1 (step S52 in Fig. 5).

Next, the pulse interpolation unit 22 obtains a position in a workpiece coordinate system on a post-local interpolation tool path corresponding to the initially set reference time T (step S54). Specifically, the pulse interpolation unit 22 obtains an intervening variable s corresponding to the initially set reference time T from the intervening variable time function s(T), and obtains, from the obtained intervening variable s and the post-local interpolation tool path, a position in a workpiece coordinate system on a post-local interpolation tool path corresponding to the intervening variable s.

Subsequently, the pulse interpolation unit 22 obtains a position coordinate newp [] for each transfer axis corresponding to the obtained position in the workpiece coordinate system on the post-local interpolation tool path (step S56).

Next, the pulse interpolation unit 22 initially sets a count t of a counter (hereinafter, referred to as an actual time counter) to zero, the counter counting the number of lapsed unit times of actual time (step S58), and sets the position coordinate newp [] for each transfer axis obtained in step S56 as an old coordinate oldp [] (step S60).

Subsequently, the pulse interpolation unit 22 derives a value of the acceleration/deceleration function g(t) corresponding to the count t of the actual time counter at this moment as a reference unit time dT and derives a primary differential value of t of the acceleration/deceleration function g(t) at this moment as a variation rate dG of the reference unit time dT (step S62).

Next, the pulse interpolation unit 22 adds the reference unit time dT obtained in step S62 to the reference time T initially set in step S52 to obtain a new reference time T (step S64).

Subsequently, the pulse interpolation unit 22 obtains a position on a post-local interpolation tool path corresponding to the new reference time T in a similar manner to step S54 (step S66).

Next, the pulse interpolation unit 22 obtains a position coordinate newp [] for each transfer axis corresponding to the obtained position on the post-local interpolation tool path (step S68).

Subsequently, the pulse interpolation unit 22 calculates a command pulse (step S70). Specifically, the pulse interpolation unit 22 subtracts from the position coordinate newp [] for each transfer axis obtained in step S68 a corresponding old coordinate oldp [] for each transfer axis set in step S60 to obtain a variation in the position coordinate on each transfer axis per reference unit time dT or, in other words, a transfer amount per reference unit time dT of the support 102b, 106a, 108a, or 110a corresponding to each transfer axis, and sets the obtained transfer amount as a command pulse per unit time (per the specific period) of actual time.

Subsequently, the control unit 24 outputs the command pulse per the specific period obtained by the pulse interpolation unit 22 to the servomotor of each of the transfer units 102c, 106b, 108b, and 110b (step S72). Accordingly, the respective transfer units 102c, 106b, 108b, and 110b transfer corresponding supports 102b, 106a, 108a, and 110a in directions of corresponding transfer axes by a transfer amount indicated by the command pulse sent from the control unit 24 per specific period.

Next, the pulse interpolation unit 22 determines whether or not a stop request has been made (step S74 in Fig. 6). Specifically, the monitoring unit 10 monitors the presence or absence of transmission of an emergency stop signal from the stop signal transmitting unit 124b, and outputs a stop request when an emergency stop signal has been transmitted from the stop signal transmitting unit 124b and does not output a stop request when an emergency stop signal has not been transmitted from the stop signal transmitting unit 124b. The pulse interpolation unit 22 determines whether or not a stop request has been made by the monitoring unit 10.

At this point, when the pulse interpolation unit 22 determines that a stop request has not been made, the pulse interpolation unit 22 next determines whether or not a velocity modification request has been made (step S76). Specifically, the monitoring unit 10 monitors the presence or absence of transmission of a velocity modification signal from the velocity modification signal transmitting unit 128b, and outputs a velocity modification request when a velocity modification signal has been transmitted from the velocity modification signal transmitting unit 128b and does not output a velocity modification request when a velocity modification signal has not been transmitted from the velocity modification signal transmitting unit 128b. The pulse interpolation unit 22 determines whether or not a velocity modification request has been made by the monitoring unit 10.

At this point, when the pulse interpolation unit 22 determines that a velocity modification request has not been made, the pulse interpolation unit 22 next determines whether or not the present count t of the actual time counter is equal to or lower than a required time *time* (step S78). When the pulse interpolation unit 22 determines that the present count t of the actual time counter is equal to or lower than the required time *time,* the pulse interpolation unit 22 next determines whether or not the present count t of the actual time counter is equal to the required time *time* (step S80). At this point, when the pulse interpolation unit 22 determines that the present count t of the actual time counter is equal to the required time *time,* the pulse interpolation unit 22 assumes that a present override coefficient or, in other words, the present reference unit time dT has reached a target override coefficient ka, and next determines whether or not the reached target override coefficient ka is greater than zero (step S82). When the pulse interpolation unit 22 determines that the reached target override coefficient ka is greater than zero, the pulse interpolation unit 22 sets the acceleration/deceleration function g(t) to a value (constant value) equal to the reached target override coefficient ka and sets the required time *time* to -1 (step S84), and subsequently counts up the count t of the actual time counter by +1 (step S86).

Next, the pulse interpolation unit 22 determines whether or not shutdown processing is to be performed (step S88). At this point, when the pulse interpolation unit 22 determines that shutdown processing is to be performed, the shutdown processing is performed and the numerical control process according to the present embodiment is concluded. On the other hand, when the pulse interpolation unit 22 determines that shutdown processing is not to be performed, processing of steps S60 and thereafter is repetitively performed.

Moreover, when the pulse interpolation unit 22 determines in step S78 that the present count t of the actual time counter is greater than the required time *time,* the pulse interpolation unit 22 next makes the shutdown determination of step S88. When a special command has not been inputted to the command input device 122 after startup of the machine tool, since the required time *time* = -1 set in step S52 is maintained, the pulse interpolation unit 22 determines in step S78 that the present count t of the actual time counter is greater than the required time time. Therefore, in this case, the pulse interpolation unit 22 makes the shutdown determination of step S88 after step S78. In addition, when the pulse interpolation unit 22 determines in step S80 that the present count t of the actual time counter is not equal to the required time *time,* the pulse interpolation unit 22 next counts up the count t of the actual time counter in step S86 and subsequently makes the shutdown determination in step S88.

In step S60 which is once again performed after step S88, the pulse interpolation unit 22 sets the position coordinate newp [] for each transfer axis obtained in step S68 as an old coordinate oldp [] and, in subsequent step S62, the pulse interpolation unit 22 derives a value of the acceleration/deceleration function g(t) corresponding to the count t of the actual time counter at this moment as the reference unit time dT and derives a primary differential value of t of the acceleration/deceleration function g(t) at this moment as the variation rate dG of the reference unit time dT.

On the other hand, when the pulse interpolation unit 22 determines in step S74 that a stop request has been made, the pulse interpolation unit 22 causes the memory 5 to store the reference unit time dT at this moment as a restart override coefficient kϕ and sets the target override coefficient ka to zero (step S90). Subsequently, the pulse interpolation unit 22 causes a variation in the present reference unit time dT to a unit time equal to the target override coefficient ka, calculates an acceleration/deceleration function g(t) up to a variation in the variation rate dG of the present reference unit time dT to zero in association with the variation in the present reference unit time dT, and calculates a required time *time* that is required for the variations in dT and dG (step S92). In this case, since the target override coefficient ka is set to zero, the pulse interpolation unit 22 obtains the acceleration/deceleration function g(t) until the present reference unit time dT is decreased to zero and the required time *time* that is required until the present reference unit time dT is decreased to zero. Subsequently, the pulse interpolation unit 22 resets the count t of the actual time counter to zero (step S58) and, thereafter, processing of steps S60 to S88 is repetitively performed. In step S62 in this case, the pulse interpolation unit 22 obtains the reference unit time dT from the acceleration/deceleration function g(t) obtained in step S92. In this manner, the reference unit time dT varies to zero in accordance with the acceleration/deceleration function g(t) and the required time *time* obtained in step S92 and, accordingly, a transfer amount for each transfer axis instructed by a command pulse varies to zero. As a result, an emergency stop of the supports 102b, 106a, 108a, and 110a by the respective transfer units 102c, 106b, 108b, and 110b (an emergency stop of the transfer object) is executed.

In addition, when the pulse interpolation unit 22 determines in step S76 that a velocity modification request has been made by the monitoring unit 10, the pulse interpolation unit 22 sets the target override coefficient ka to a value equal to the requested override coefficient kr included in the velocity modification request (step S94). Subsequently, the pulse interpolation unit 22 causes a variation in the present reference unit time dT to a unit time equal to the target override coefficient ka (the requested override coefficient kr), obtains an acceleration/deceleration function g(t) up to a variation in the variation rate dG of the present reference unit time dT to zero in association with the variation in the present reference unit time dT, and obtains a required time *time* that is required for the variations in dT and dG (step S92). Subsequently, the pulse interpolation unit 22 resets the count t of the actual time counter to zero (step S58) and, thereafter, processing of steps S60 to S88 is repetitively performed. In step S62 in this case, the pulse interpolation unit 22 obtains the reference unit time dT from the acceleration/deceleration function g(t) which is obtained in step S92 and which causes the variation in the reference unit time dT to a unit time equal to the requested override coefficient kr. In this manner, the reference unit time dT varies to a unit time equal to the requested override coefficient kr in accordance with the acceleration/deceleration function g(t) and the required time *time* and, accordingly, a transfer amount for each transfer axis instructed by a command pulse varies. As a result, a modification of a transfer velocity of the supports 102b, 106a, 108a, and 110a by the respective transfer units 102c, 106b, 108b, and 110b (a modification of a travel velocity of the transfer object) is executed.

Furthermore, when the pulse interpolation unit 22 determines in step S82 that the reached target override coefficient ka is not greater than zero or, in other words, the reached target override coefficient ka is zero, the pulse interpolation unit 22 next determines whether or not shutdown processing is to be performed (step S96). Moreover, a state where the reached target override coefficient ka is zero refers to a state where the reference unit time dT has become zero, driving of the servomotors of the respective transfer units 102c, 106b, 108b, and 110b has stopped, and travel of the transfer object has been suspended. At this point, when the pulse interpolation unit 22 determines that shutdown processing is to be performed, the shutdown processing is performed and the numerical control process according to the present embodiment is concluded. On the other hand, when the pulse interpolation unit 22 determines that shutdown processing is not to be performed, the pulse interpolation unit 22 next determines whether or not a restart request has been made (step S98). Specifically, the monitoring unit 10 monitors the presence or absence of transmission of a restart signal from the restart signal transmitting unit 126b, and outputs a restart request when a restart signal has been transmitted from the restart signal transmitting unit 126b and does not output a restart request when a restart signal has not been transmitted from the restart signal transmitting unit 126b. The pulse interpolation unit 22 determines whether or not a restart request has been made by the monitoring unit 10.

At this point, when the pulse interpolation unit 22 determines that a restart request has not been made, the pulse interpolation unit 22 next makes the shutdown determination of step S96. When the pulse interpolation unit 22 determines that a restart request has been made, the pulse interpolation unit 22 next sets the target override coefficient ka to a value equal to the restart override coefficient kϕ stored in the memory 5 (step S 100). Subsequently, the pulse interpolation unit 22 causes a variation in the present reference unit time dT to a unit time equal to the target override coefficient ka (the restart override coefficient kϕ), obtains an acceleration/deceleration function g(t) up to a variation in the variation rate dG of the present reference unit time dT to zero in association with the variation in the present reference unit time dT, and obtains a required time time that is required for the variations in dT and dG (step S92). Subsequently, the pulse interpolation unit 22 resets the count t of the actual time counter to zero (step S58) and, thereafter, processing of steps S60 to S88 is repetitively performed. In step S62 in this case, the pulse interpolation unit 22 obtains the reference unit time dT from the acceleration/deceleration function g(t) which is obtained in step S92 and which causes the variation in the reference unit time dT to a unit time equal to the restart override coefficient kϕ. In this manner, the reference unit time dT varies from zero to a unit time equal to the restart override coefficient kϕ in accordance with the acceleration/deceleration function g(t) and the required time *time* and, accordingly, a transfer amount for each transfer axis instructed by a command pulse varies. As a result, transfer of the supports 102b, 106a, 108a, and 110a by the respective transfer units 102c, 106b, 108b, and 110b is restarted and travel of the transfer object is restarted.

The control process by the numerical control device 2 according to the present embodiment is performed as described above.

As described above, in the present embodiment, a command pulse per specific period for controlling operations of the respective transfer units 102c, 106b, 108b, and 110b can be obtained by a single pulse interpolation step and operation processing can be simplified.

Specifically, in the present embodiment, since processing for locally interpolating an interpolation interval of a tool path so that a variation in a differential value that is discontinuous at an interpolation object point becomes a continuous variation and processing for obtaining, when a special command for instructing an operation accompanied by acceleration or deceleration of a transfer object has been inputted, a new reference time T resulting from adjusting a length of a reference unit time dT to a length in accordance with a velocity variation in the transfer object instructed by the special command are performed before pulse interpolation processing for obtaining a command pulse for controlling transfer of the supports 102b, 106a, 108a, and 110a by the transfer units 102c, 106b, 108b, and 110b, the command pulse can be obtained by a single pulse interpolation step after local interpolation processing of the tool path and derivation processing of the new reference time T. As a result, in the present embodiment, operation processing can be simplified.

In addition, in the present embodiment, the path local filter 16 locally interpolates an interpolation interval of a tool path so that when a variation in a primary differential value before and after an interpolation object point is discontinuous, the variation in the primary differential value becomes a continuous variation, and when a variation in a primary differential value before and after an interpolation object point is continuous and a variation in a secondary differential value before and after the interpolation object point is discontinuous, the variation in the secondary differential value becomes a continuous variation. When a variation in a primary differential value before and after an interpolation object point is discontinuous, a velocity variation in a transfer object before and after the interpolation object point is discontinuous. However, in the present embodiment, such a discontinuous velocity variation in the transfer object before and after an interpolation object point can be changed to a continuous velocity variation. In addition, when a variation in a secondary differential value before and after an interpolation object point is discontinuous, an acceleration variation in a transfer object before and after the interpolation object point is discontinuous. However, in the present embodiment, such a discontinuous acceleration variation in the transfer object before and after an interpolation object point can be changed to a continuous acceleration variation. Therefore, in the present embodiment, abnormal data included in a tool path as an interpolation object point can be interpolated to mitigate a sudden velocity variation and a sudden acceleration variation in a transfer object attributable to the abnormal data and, as a result, generation of a mechanical shock attributable to the abnormal data in the tool path can be suppressed.

Furthermore, in the present embodiment, a new reference time T is obtained in response to the special command by adjusting a length of a reference unit time dT that is common to the respective transfer axes, a command pulse representing a transfer amount per specific period for each transfer axis is obtained based on the new reference time T, and the supports 102b, 106a, 108a, and 110a are transferred by the transfer units 102c, 106b, 108b, and 110b according to the command pulse. Therefore, in travel of the transfer object performed by the transfer, a relative positional relationship between the respective coordinate axes of the workpiece coordinate system in an original tool path is maintained. As a result, generation of errors in machined shapes in association with an input of the special command can be suppressed. In addition, in the present embodiment, since only an interpolation interval of the tool path is locally interpolated by the path local filter 16, unlike a case where interpolation processing is performed on an entire tool path, generation of errors in machined shapes attributable to interpolation processing can be prevented in intervals other than the interpolation interval.

In addition, in the present embodiment, since an interpolation interval of the tool path is locally interpolated by the path local filter 16 so that a post-local interpolation tool path is continuously connected before and after a start point of the interpolation interval and before and after an end point of the interpolation interval, respectively, when controlling subsequent operations of the respective transfer units 102c, 106b, 108b, and 110b based on the post-local interpolation tool path, sudden variations in operations of the respective transfer units 102c, 106b, 108b, and 110b which cause a sudden movement of the transfer object can be prevented from occurring at the start point and the end point of the interpolation interval.

Furthermore, in the present embodiment, when interpolation intervals of adjacent interpolation object points on a tool path overlap each other, the path local filter 16 assumes, as a single interpolation interval, a section between a start point of an interpolation interval that is positioned closest to a start point of the tool path and an end point of an interpolation interval that is positioned closest to an end point of the tool path among the overlapping interpolation intervals and locally interpolates the tool path in the single interpolation interval. Therefore, even in a case where abnormal data such as a vibration due to a plurality of interpolation object points being in close proximity is included in the tool path, the tool path near the plurality of interpolation object points can be collectively locally interpolated to produce a smooth curve.

The embodiment disclosed herein should be considered in all respects illustrative and not restrictive. It is intended that the scope of the present invention be defined not by the description of the embodiment given above but rather by the claims appended hereto, and that the scope of the invention include equivalents thereof and all modifications made therein.

For example, the numerical control device according to the present invention can also be applied to types of machine tools other than the machine tool described in the embodiment above. For example, the numerical control device according to the present invention can be applied to a five-axis machine tool, a machine tool having a parallel mechanism, a lathe, and other types of machine tools.

In addition, the path local filter 16 may set only one of a command point at which a variation in a primary differential value of the intervening variable is continuous and a variation in a secondary differential value of the intervening variable is discontinuous and a command point at which a variation in a primary differential value of the intervening variable is discontinuous as an interpolation object point.

Furthermore, a method of deriving a distributed interval width and an interpolation interval width used by the path local filter 16 is not limited to the method described above and a distributed interval width and an interpolation interval width may be obtained by various derivation methods other than that described above. In addition, while the interpolation interval width is set to an interval width that is equal in size to the distributed interval width in the embodiment, the interpolation interval width is not limited to this interval width. In other words, the interpolation interval width may be an interval width greater than the distributed interval width.

Furthermore, the path local filter 16 may locally interpolate an interpolation interval of the tool path so that, in addition to a post-local interpolation tool path being continuously connected before and after a start point of the interpolation interval and before and after an end point of the interpolation interval, respectively, the post-local interpolation tool path becomes a path in which a primary differential value of an intervening variable of the post-local interpolation tool path continuously varies before and after a start point of the interpolation interval and before and after an end point of the interpolation interval, respectively. In this case, the error correction unit 16b of the path local filter 16 obtains an error correction path which, in addition to satisfying a condition that a value of the error correction path at the start point of the interpolation interval is equal to a value obtained by subtracting a value of the tool path at the start point from a value of an error-having interpolation path at the start point and that a value of the error correction path at the end point of the interpolation interval is equal to a value obtained by subtracting a value of the tool path at the end point from a value of the error-having interpolation path at the end point, satisfies a condition that a primary differential value of the error correction path at the start point of the interpolation interval is equal to a value obtained by subtracting a primary differential value of the tool path at the start point from a primary differential value of the error-having interpolation path at the start point and that a primary differential value of the error correction path at the end point of the interpolation interval is equal to a value obtained by subtracting a primary differential value of the tool path at the end point from a primary differential value of the error-having interpolation path at the end point.

In addition, the post-local interpolation tool path produced by replacing, with an interpolation interval of the tool path, a path obtained by the error correction unit 16b by subtracting such an error correction path from an error-having interpolation path becomes a path in which primary differential values continuously vary before and after a start point and before and after an end point of the interpolation interval. As a result, when controlling subsequent operations of the respective transfer units 102c, 106b, 108b, and 110b based on the post-local interpolation tool path, transfer of the supports 102b, 106a, 108a, and 110a by the respective transfer units 102c, 106b, 108b, and 110b can be controlled so that a travel velocity of the transfer object varies continuously at respective points corresponding to before and after a start point and before and after an end point of the interpolation interval.

Furthermore, the path local filter 16 may locally interpolate an interpolation interval of the tool path so that, in addition to a post-local interpolation tool path being continuously connected before and after a start point and before and after an end point of the interpolation interval, respectively, and a primary differential value of an intervening variable of the post-local interpolation tool path being continuously varied before and after a start point and before and after an end point of the interpolation interval, respectively, the post-local interpolation tool path becomes a path in which a secondary differential value of the intervening variable of the post-local interpolation tool path continuously varies before and after a start point and before and after an end point of the interpolation interval, respectively. In this case, the error correction unit 16b of the path local filter 16 obtains an error correction path which, in addition to satisfying the two conditions described above, satisfies a condition that a secondary differential value of the error correction path at the start point of the interpolation interval is equal to a value obtained by subtracting a secondary differential value of the tool path at the start point from a secondary differential value of the error-having interpolation path at the start point and that a secondary differential value of the error correction path at the end point of the interpolation interval is equal to a value obtained by subtracting a secondary differential value of the tool path at the end point from a secondary differential value of the error-having interpolation path at the end point.

In addition, the post-local interpolation tool path produced by replacing, with an interpolation interval of the tool path, a path obtained by the error correction unit 16b by subtracting an error correction path from an error-having interpolation path becomes a path in which primary differential values and secondary differential values of the intervening variable continuously vary before and after a start point and before and after an end point of the interpolation interval. As a result, when controlling subsequent operations of the respective transfer units 102c, 106b, 108b, and 110b based on the post-local interpolation tool path, transfer of corresponding supports 102b, 106a, 108a, and 110a by the respective transfer units 102c, 106b, 108b, and 110b can be controlled so that both a travel velocity and acceleration of the transfer object vary continuously at respective points corresponding to before and after a start point and before and after an end point of the interpolation interval.

Furthermore, while a primary differential value of a tool path is distributed to distributed intervals using a linear distribution function in the embodiment described above, this distribution method is not restrictive. Specifically, various distribution functions other than the distribution function described above may be used as the distribution function for distributing a primary differential value of the tool path.

Moreover, the distribution function used for the distribution is desirably a function in which an integration in an interval expressed as [-A/2, A/2] is 1 and which has a left-right symmetrical shape with respect to a center of the interval. Examples of such a distribution function include a bell-like distribution function f(s) represented by the expression below.

$$f(s) = \begin{cases} (4/A \times s + 2)/A & (-A/2 \leqq s \leqq 0) \\ (-4/A \times s + 2)/A & (0 \leqq s \leqq A/2) \end{cases}$$

Moreover, f(s) = 0 holds true outside of the distributed interval -A/2 ≤ s ≤ A/2.

Using such a bell-like distribution function enables an interpolation interval to be interpolated into a smoother curve as compared to using the linear distribution function.

[Summary of Embodiment]

The embodiment and modifications may be summarized as follows.

A numerical control device according to the embodiment and modifications thereof is a numerical control device which is provided in a machine tool including a plurality of transfer devices which transfer a transfer object which is a workpiece or a tool for machining the workpiece in order to machine the workpiece, and a command input device for inputting, from the outside, a special command for instructing an operation accompanied by a velocity variation in the transfer object, the operation being performed separately from a normal transfer of the transfer object during machining of the workpiece, each transfer device having a support for supporting the transfer object and a transfer unit which transfers the transfer object by transferring the support in a specific transfer axis direction, and the numerical control device numerically controlling each transfer device by outputting a command pulse per specific period to each transfer unit, the numerical control device comprising: a storage unit which stores a machining program including a tool path in which a locus traced by the tool during machining of the workpiece is expressed as a function of a position coordinate of the tool and an intervening variable, the position coordinate of the tool being a position coordinate in a workpiece coordinate system which is fixed on the workpiece, the intervening variable being an integrated length along the locus of the tool; a tool path derivation unit which obtains the tool path from the machining program stored in the storage unit; a path local filter which assumes, as an interpolation object point, at least one command point of a certain command point and another command point among a plurality of command points included in the tool path obtained by the tool path derivation unit, the certain command point being a command point at which a variation in a primary differential value of the intervening variable of the tool path is continuous and a variation in a secondary differential value of the intervening variable of the tool path is discontinuous, the another command point being a command point at which a variation in a primary differential value of the intervening variable of the tool path is discontinuous, and which locally interpolates only an interpolation interval among the tool path so that the variation in the differential value which is discontinuous at the interpolation object point becomes a continuous variation, the interpolation interval having a specific interval width ranging before and after the interpolation object point; an intervening variable time function derivation unit which obtains an intervening variable time function expressing a variation in the intervening variable with respect to a lapse of a reference time, based on an acceleration/deceleration condition of the transfer object and a post-local interpolation tool path which is the tool path after being locally interpolated by the path local filter; a pulse interpolation unit which derives a reference time which proceeds per reference unit time based on the specific period, which obtains the intervening variable corresponding to each time point at every reference unit time of the derived reference time from the intervening variable time function obtained by the intervening variable time function derivation unit, which obtains a position coordinate corresponding to the intervening variable at each obtained time point, the position coordinate being a position coordinate on the post-local interpolation tool path in the workpiece coordinate system, which obtains, from the obtained position coordinate at each time point, a position coordinate on each transfer axis corresponding to each transfer unit, which obtains a transfer amount of the support in each transfer axis direction from the obtained position coordinate on each transfer axis, the transfer amount being a transfer amount per reference unit time of the derived reference time, and which sets the transfer amount per reference unit time as the command pulse per the specific period; and a control unit which outputs the command pulse per the specific period for each transfer axis direction to each transfer unit corresponding to each transfer axis direction, the command pulse being a command pulse obtained by the pulse interpolation unit, and which causes each transfer unit to transfer the corresponding support in accordance with the transfer amount per the specific period indicated by the outputted command pulse, wherein the pulse interpolation unit sets the reference unit time to a time equal to the specific period after startup of the machine tool and until the special command is inputted to the command input device, reduces the reference unit time by a rate in accordance with deceleration instructed by the special command when the special command instructing deceleration of the transfer object is inputted to the command input device after startup of the machine tool, and extends the reference unit time by a rate in accordance with speed-up instructed by the special command when the special command instructing speed-up of the transfer object is inputted to the command input device after startup of the machine tool.

With this numerical control device, a command pulse per specific period for controlling transfer of a support by each transfer unit can be obtained by a single pulse interpolation step and therefore operation processing can be simplified. Specifically, with this numerical control device, since processing for locally interpolating an interpolation interval of a tool path so that a variation in a differential value that is discontinuous at an interpolation object point becomes a continuous variation and processing for deriving, when a special command has been inputted, a reference time resulting from adjusting a length of a reference unit time in accordance with a velocity variation in the transfer object instructed by the special command are performed before pulse interpolation processing for obtaining a command pulse for controlling transfer of a support by each transfer unit, a command pulse for controlling transfer of a support by each transfer unit can be obtained by a single pulse interpolation step after the local interpolation processing of the tool path and the derivation processing of the reference time. As a result, with this numerical control device, operation processing can be simplified.

In addition, with this numerical control device, since a path local filter locally interpolates an interpolation interval of a tool path so that a variation in a differential value that is discontinuous at an interpolation object point becomes a continuous variation, when a variation in a primary differential value before and after an interpolation object point is discontinuous, interpolation is performed so that the variation in the primary differential value becomes a continuous variation, and when a variation in a secondary differential value before and after an interpolation object point is discontinuous, interpolation is performed so that the variation in the secondary differential value becomes a continuous variation. When a variation in a primary differential value before and after an interpolation object point is discontinuous, a velocity variation in a transfer object before and after the interpolation object point is discontinuous. However, with the numerical control device according to the present embodiment, such a discontinuous velocity variation in the transfer object before and after an interpolation object point can be changed to a continuous velocity variation. In addition, when a variation in a secondary differential value before and after an interpolation object point is discontinuous, an acceleration variation in a transfer object before and after the interpolation object point is discontinuous. However, with the numerical control device according to the present embodiment, such a discontinuous acceleration variation in the transfer object before and after an interpolation object point can be changed to a continuous acceleration variation. Therefore, with the numerical control device according to the present invention, an abnormal data portion which is included in a tool path and which causes a sudden velocity variation and a sudden acceleration variation in a transfer object can be interpolated to mitigate a velocity variation and an acceleration variation in a transfer object at a time point corresponding to the interpolation object point and, as a result, generation of a mechanical shock attributable to the abnormal data in the tool path can be suppressed.

Moreover, with this numerical control device, since a reference time resulting from adjusting a length of a reference unit time in accordance with a special command is derived, a transfer amount of the support for each transfer axis per reference unit time of the derived reference time is obtained, and the transfer amount is set as a command pulse per specific period, with travel of the transfer object that is performed due to each transfer unit transferring the support in accordance with the command pulse, a relative positional relationship among the respective coordinate axes of the workpiece coordinate system in the original tool path is maintained. As a result, a generation of errors in machined shapes in association with the special command can be suppressed. In addition, with this numerical control device, since only an interpolation interval of the tool path is locally interpolated by the path local filter, unlike a case where interpolation processing is performed on an entire tool path, generation of errors in machined shapes can be prevented in intervals other than the interpolation interval.

In the numerical control device, preferably, the path local filter locally interpolates the interpolation interval of the tool path so that the post-local interpolation tool path is continuously connected before and after a start point of the interpolation interval and before and after an end point of the interpolation interval, respectively.

According to this configuration, a post-local interpolation tool path can be obtained which is continuously connected before and after a start point and before and after an end point of the interpolation interval, respectively. Therefore, when subsequently controlling each transfer unit based on the post-local interpolation tool path, sudden variations in operations of the respective transfer units can be prevented from occurring at the start point and the end point of the interpolation interval, the sudden variations causing a sudden movement of the transfer object.

In this case, preferably, the path local filter locally interpolates the interpolation interval of the tool path so that the post-local interpolation tool path becomes a path in which primary differential values of the intervening variable of the post-local interpolation tool path continuously vary before and after a start point of the interpolation interval and before and after an end point of the interpolation interval, respectively.

According to this configuration, a post-local interpolation tool path can be obtained in which primary differential values continuously vary before and after a start point and before and after an end point of the interpolation interval. Therefore, when subsequently controlling each transfer unit based on the post-local interpolation tool path, transfer of a corresponding support by each transfer unit can be controlled so that a travel velocity of the transfer object continuously varies at respective time points corresponding to before and after a start point and before and after an end point of the interpolation interval.

Furthermore, in this case, the path local filter may locally interpolate the interpolation interval of the tool path so that the post-local interpolation tool path becomes a path in which secondary differential values of the intervening variable of the post-local interpolation tool path continuously vary before and after a start point of the interpolation interval and before and after an end point of the interpolation interval, respectively.

According to this configuration, a post-local interpolation tool path can be obtained in which secondary differential values continuously vary before and after a start point and before and after an end point of the interpolation interval. Therefore, when subsequently controlling each transfer unit based on the post-local interpolation tool path, transfer of a corresponding support by each transfer unit can be controlled so that acceleration of the transfer object continuously varies at respective time points corresponding to before and after a start point and before and after an end point of the interpolation interval.

With the configuration in which the path local filter locally interpolates the interpolation interval of the tool path so that the post-local interpolation tool path is continuously connected before and after a start point of the interpolation interval and before and after an end point of the interpolation interval, respectively, the path local filter preferably includes: a local interpolation unit which sets, as an adjustment interval, an interval created by respectively extending the interpolation interval in both longitudinal directions by a specific interval width, which selects a plurality of interpolation blocks having at least a part thereof included in the adjustment interval from the tool path, the interpolation block being a portion between adjacent command points among the tool path, which performs interpolation processing on each of the plurality of selected interpolation blocks to obtain post-interpolation functions that express the respective interpolation blocks after the interpolation processing, which integrates the obtained post-interpolation functions of the respective interpolation blocks to obtain a post-interpolation integrated function, and which extracts an interval corresponding to the interpolation interval among the obtained post-interpolation integrated function to obtain an error-having interpolation path that has been interpolated so that a variation in a differential value that is discontinuous at the interpolation object point in the interpolation interval becomes a continuous variation; and an error correction unit which corrects the error-having interpolation path obtained by the local interpolation unit so that a value of the error-having interpolation path corresponding to a start point of the interpolation interval becomes equal to a value of a start point of the interpolation interval of the tool path which has not been locally interpolated and a value of the error-having interpolation path corresponding to an end point of the interpolation interval becomes equal to a value of an end point of the interpolation interval of the tool path which has not been locally interpolated, and which replaces the interpolation path after correction with the interpolation interval of the tool path, wherein the local interpolation unit sets a plurality of integration intervals respectively having a plurality of first positions in the interpolation block as centers and respectively having a specific interval width, the first positions being positions at which the intervening variables differ each other, respectively obtains primary differential values of the intervening variable of the tool path at a plurality of second positions with different intervening variables in each of the set integration intervals, and integrates, over the integration intervals, a post-distribution differential function obtained when the obtained primary differential values at the respective second positions are distributed based on a specific distribution function in respective distributed intervals having the respective second positions as centers and having a same interval width as the integration intervals, to obtain the post-interpolation functions by the integration.

With this configuration, a path local filter can be specifically constructed which locally interpolates an interpolation interval of a tool path so that a variation in a differential value that is discontinuous at an interpolation object point in the interpolation interval of the tool path becomes a continuous variation and a post-local interpolation tool path becomes continuously connected before and after a start point of the interpolation interval and before and after an end point of the interpolation interval.

In the numerical control device, preferably, when there are a plurality of interpolation object points on the tool path and interpolation intervals of adjacent interpolation object points overlap each other, the path local filter assumes, as a single interpolation interval, a section between a start point of an interpolation interval which is positioned closest to a start point of the tool path among the overlapping interpolation intervals and an end point of an interpolation interval which is positioned closest to an end point of the tool path among the overlapping interpolation intervals and locally interpolates the tool path in the interpolation interval.

According to this configuration, even in a case where abnormal data such as a vibration due to a plurality of interpolation object points being in close proximity to one another is included in the tool path, the tool path near the plurality of interpolation object points can be collectively locally interpolated to produce a smooth curve.

As described above, according to this embodiment, when an operation accompanied by a velocity variation in a transfer object is performed in accordance with a special command inputted to a special command device separately from normal transfer of the transfer object during machining of a workpiece in a machine tool, errors in machined shapes can be suppressed while improving responsiveness between the time point of input of the special command until an operation in accordance with the special command is executed. In addition, operation processing for interpolating a tool path can be simplified.

**Claims**

1. A numerical control device which is provided in a machine tool including a plurality of transfer devices which transfer a transfer object which is a workpiece or a tool for machining the workpiece in order to machine the workpiece, and a command input device for inputting, from the outside, a special command for instructing an operation accompanied by a velocity variation in the transfer object, the operation being performed separately from a normal transfer of the transfer object during machining of the workpiece, each transfer device having a support for supporting the transfer object and a transfer unit which transfers the transfer object by transferring the support in a specific transfer axis direction, and the numerical control device numerically controlling each transfer device by outputting a command pulse per specific period to each transfer unit, the numerical control device comprising:

   a storage unit which stores a machining program including a tool path in which a locus traced by the tool during machining of the workpiece is expressed as a function of a position coordinate of the tool and an intervening variable, the position coordinate of the tool being a position coordinate in a workpiece coordinate system which is fixed on the workpiece, the intervening variable being an integrated length along the locus of the tool;
   a tool path derivation unit which obtains the tool path from the machining program stored in the storage unit;
   a path local filter which assumes, as an interpolation object point, at least one command point of a certain command point and another command point among a plurality of command points included in the tool path obtained by the tool path derivation unit, the certain command point being a command point at which a variation in a primary differential value of the intervening variable of the tool path is continuous and a variation in a secondary differential value of the intervening variable of the tool path is discontinuous, the another command point being a command point at which a variation in a primary differential value of the intervening variable of the tool path is discontinuous, and which locally interpolates only an interpolation interval among the tool path so that the variation in the differential value which is discontinuous at the interpolation object point becomes a continuous variation, the interpolation interval having a specific interval width ranging before and after the interpolation object point;
   an intervening variable time function derivation unit which obtains an intervening variable time function expressing a variation in the intervening variable with respect to a lapse of a reference time, based on an acceleration/deceleration condition of the transfer object and a post-local interpolation tool path which is the tool path after being locally interpolated by the path local filter;
   a pulse interpolation unit which derives a reference time which proceeds per reference unit time based on the specific period, which obtains the intervening variable corresponding to each time point at every reference unit time of the derived reference time from the intervening variable time function obtained by the intervening variable time function derivation unit, which obtains a position coordinate corresponding to the intervening variable at each obtained time point, the position coordinate being a position coordinate on the post-local interpolation tool path in the workpiece coordinate system, which obtains, from the obtained position coordinate at each time point, a position coordinate on each transfer axis corresponding to each transfer unit, which obtains a transfer amount of the support in each transfer axis direction from the obtained position coordinate on each transfer axis, the transfer amount being a transfer amount per reference unit time of the derived reference time, and which sets the transfer amount per reference unit time as the command pulse per the specific period; and
   a control unit which outputs the command pulse per the specific period for each transfer axis direction to each transfer unit corresponding to each transfer axis direction, the command pulse being a command pulse obtained by the pulse interpolation unit, and which causes each transfer unit to transfer the corresponding support in accordance with the transfer amount per the specific period indicated by the outputted command pulse, wherein the pulse interpolation unit sets the reference unit time to a time equal to the specific period after startup of the machine tool and until the special command is inputted to the command input device, reduces the reference unit time by a rate in accordance with deceleration instructed by the special command when the special command instructing deceleration of the transfer object is inputted to the command input device after startup of the machine tool, and extends the reference unit time by a rate in accordance with speed-up instructed by the special command when the special command instructing speed-up of the transfer object is inputted to the command input device after startup of the machine tool.

2. The numerical control device according to claim 1, wherein the path local filter locally interpolates the interpolation interval of the tool path so that the post-local interpolation tool path is continuously connected before and after a start point of the interpolation interval and before and after an end point of the interpolation interval, respectively.

3. The numerical control device according to claim 2, wherein

the path local filter locally interpolates the interpolation interval of the tool path so that the post-local interpolation tool path becomes a path in which primary differential values of the intervening variable of the post-local interpolation tool path continuously vary before and after a start point of the interpolation interval and before and after an end point of the interpolation interval, respectively.

4. The numerical control device according to claim 3, wherein
the path local filter locally interpolates the interpolation interval of the tool path so that the post-local interpolation tool path becomes a path in which secondary differential values of the intervening variable of the post-local interpolation tool path continuously vary before and after a start point of the interpolation interval and before and after an end point of the interpolation interval, respectively.

5. The numerical control device according to any one of claims 2 to 4, wherein
the path local filter includes: a local interpolation unit which sets, as an adjustment interval, an interval created by respectively extending the interpolation interval in both longitudinal directions by a specific interval width, which selects a plurality of interpolation blocks having at least a part thereof included in the adjustment interval from the tool path, the interpolation block being a portion between adjacent command points among the tool path, which performs interpolation processing on each of the plurality of selected interpolation blocks to obtain post-interpolation functions that express the respective interpolation blocks after the interpolation processing, which integrates the obtained post-interpolation functions of the respective interpolation blocks to obtain a post-interpolation integrated function, and which extracts an interval corresponding to the interpolation interval among the obtained post-interpolation integrated function to obtain an error-having interpolation path that has been interpolated so that a variation in a differential value that is discontinuous at the interpolation object point in the interpolation interval becomes a continuous variation; and an error correction unit which corrects the error-having interpolation path obtained by the local interpolation unit so that a value of the error-having interpolation path corresponding to a start point of the interpolation interval becomes equal to a value of a start point of the interpolation interval of the tool path which has not been locally interpolated and a value of the error-having interpolation path corresponding to an end point of the interpolation interval becomes equal to a value of an end point of the interpolation interval of the tool path which has not been locally interpolated, and which replaces the interpolation path after correction with the interpolation interval of the tool path, wherein
the local interpolation unit sets a plurality of integration intervals respectively having a plurality of first positions in the interpolation block as centers and respectively having a specific interval width, the first positions being positions at which the intervening variables differ each other, respectively obtains primary differential values of the intervening variable of the tool path at a plurality of second positions with different intervening variables in each of the set integration intervals, and integrates, over the integration intervals, a post-distribution differential function obtained when the obtained primary differential values at the respective second positions are distributed based on a specific distribution function in respective distributed intervals having the respective second positions as centers and having a same interval width as the integration intervals, to obtain the post-interpolation functions by the integration.

6. The numerical control device according to any one of claims 1 to 5, wherein when there are a plurality of interpolation object points on the tool path and interpolation intervals of adjacent interpolation object points overlap each other, the path local filter assumes, as a single interpolation interval, a section between a start point of an interpolation interval which is positioned closest to a start point of the tool path among the overlapping interpolation intervals and an end point of an interpolation interval which is positioned closest to an end point of the tool path among the overlapping interpolation intervals, and locally interpolates the tool path in the interpolation interval.

# FIG.1

EP 2 738 635 A1

# FIG.2

**COMMAND INPUT DEVICE** 〜122

**STOP COMMAND INPUT DEVICE** 〜124
- **EMERGENCY STOP BUTTON** 〜124a
- **STOP SIGNAL TRANSMITTING UNIT** 〜124b

**RESTART COMMAND INPUT DEVICE** 〜126
- **RESTART BUTTON** 〜126a
- **RESTART SIGNAL TRANSMITTING UNIT** 〜126b

**OVERRIDE DEVICE** 〜128
- **OVERRIDE DIAL** 〜128a
- **VELOCITY MODIFICATION SIGNAL TRANSMITTING UNIT** 〜128b

**NUMERICAL CONTROL DEVICE** 〜2

**STORAGE UNIT** 〜4

**OPERATION PROCESSING UNIT** 〜6

- **TOOL PATH DERIVATION UNIT** 〜12
- **SMOOTH INTERPOLATION UNIT** 〜14
- **PATH LOCAL FILTER** 〜16
  - **LOCAL INTERPOLATION UNIT** 〜16a
  - **ERROR CORRECTION UNIT** 〜16b
- **INTERVENING VARIABLE TIME FUNCTION DERIVATION UNIT** 〜18
- **PULSE INTERPOLATION UNIT** 〜22
- **CONTROL UNIT** 〜24

**MONITORING UNIT** 〜10

**MEMORY** 〜5

**WORKPIECE SUPPORT TRANSFER UNIT** 〜102c

**VERTICAL SUPPORT TRANSFER UNIT** 〜106b

**FIRST HORIZONTAL SUPPORT TRANSFER UNIT** 〜108b

**SECOND HORIZONTAL SUPPORT TRANSFER UNIT** 〜110b

# FIG.3

```
        ( START )
            │
            ▼           ⌐S1
┌──────────────────────────────────┐
│      READ MACHINING PROGRAM      │
└──────────────────────────────────┘
            │           ⌐S2
            ▼
┌──────────────────────────────────┐
│         DERIVE TOOL PATH         │
└──────────────────────────────────┘
            │           ⌐S3
            ▼
┌──────────────────────────────────┐
│  PERFORM BLOCK SMOOTH INTERPOLATION │
└──────────────────────────────────┘
            │           ⌐S4
            ▼
┌──────────────────────────────────┐
│    PERFORM LOCAL INTERPOLATION   │
└──────────────────────────────────┘
            │           ⌐S5
            ▼
┌──────────────────────────────────┐
│    DERIVE INTERVENING VARIABLE   │
│          TIME FUNCTION           │
└──────────────────────────────────┘
            │           ⌐S6
            ▼
┌──────────────────────────────────┐
│      DERIVE REFERENCE TIME,      │
│   PERFORM PULSE INTERPOLATION,   │
│        AND OUTPUT PULSE          │
└──────────────────────────────────┘
            │
            ▼
         ( END )
```

# FIG.4

START

S12 — IS THERE INTERPOLATION OBJECT POINT FOR WHICH INTERPOLATION INTERVAL WIDTH HAS NOT BEEN CALCULATED ? — NO / YES

S14 — CALCULATE DISTRIBUTED INTERVAL WIDTH AND INTERPOLATION INTERVAL WIDTH

S16 — DO INTERPOLATION INTERVALS OVERLAP? — NO / YES

S18 — COUPLE OVERLAPPING INTERPOLATION INTERVALS

S20 — EXTRACT INTERPOLATION INTERVAL

S22 — DERIVE ADJUSTMENT INTERVAL

S24 — INITIALLY SET POST-INTERPOLATION INTEGRATED FUNCTION

S26 — EXTRACT INTERPOLATION BLOCK

S28 — CALCULATE POST-INTERPOLATION FUNCTION

S30 — ADD POST-INTERPOLATION FUNCTION TO POST-INTERPOLATION INTEGRATED FUNCTION

S32 — INTERPOLATION PROCESSING OF ALL INTERPOLATION BLOCKS COMPLETED ? — NO / YES

S34 — DERIVE ERROR-HAVING INTERPOLATION PATH

S36 — DERIVE ERROR CORRECTION PATH

S38 — CORRECT ERROR-HAVING INTERPOLATION PATH, AND SET CORRECTED INTERPOLATION PATH AS INTERPOLATION INTERVAL OF POST-LOCAL INTERPOLATION TOOL PATH

S40 — LOCAL INTERPOLATION PROCESSING OF ALL INTERPOLATION INTERVALS COMPLETED ? — NO / YES

END

# FIG.5

START

S52
INITIALLY SET T; g(t)=1.0 ; time=-1

S54
DERIVE POSITION ON POST-LOCAL
INTERPOLATION TOOL PATH
CORRESPONDING TO INITIALLY SET T

S56
DERIVE POSITION COORDINATE
new p [ ] OF EACH DRIVE AXIS

③

S58
t=0

②

S60
old p[ ]=new p[ ]

S62
dT=g(t), dG=g'(t)

S64
DERIVE NEW T BY ADDITION OF dT

S66
DERIVE POSITION ON POST-LOCAL
INTERPOLATION TOOL PATH
CORRESPONDING TO NEW T

S68
DERIVE POSITION COORDINATE
new p [ ] FOR EACH TRANSFER AXIS

S70
CALCULATE COMMAND PULSE

S72
OUTPUT COMMAND PULSE

①

# FIG.6

# FIG.7

# FIG.8

# FIG.9

ADJUSTMENT INTERVAL

SINGLE COUPLED
INTERPOLATION INTERVAL

a                                    a

t[3]

t[5]

t[1] t[2]          p3(s)    p5(s)  t[7]   t[8]

t[0]                                 t[6]

p0(s)  p1(s)  p2(s)         p4(s)  p6(s)  p7(s)

t[4]

INTERPOLATION
INTERVAL OF t[2]

INTERPOLATION
INTERVAL OF t[3]

INTERPOLATION
INTERVAL OF t[4]

INTERPOLATION
INTERVAL OF t[5]

INTERPOLATION
INTERVAL OF t[6]

# FIG.10

INTERVAL CORRESPONDING
TO INTERPOLATION BLOCK

t[i]+a              t[i+1]-a          t[i+1]+a

t[i]-a    t[i]                      t[i+1]

$pi'(s)$

$A=2a$                     $A=2a$                    s

# FIG.11

INTERVAL CORRESPONDING
TO INTERPOLATION BLOCK

t[i]-a        t[i]    t[i+1]-a    t[i]+a        t[i+1]        t[i+1]+a

pi'(s)

A=2a

A=2a

s

# FIG.12

INTERVAL CORRESPONDING
TO INTERPOLATION BLOCK

t[i]-a        t[i+1]-a        t[i]+a    t[i+1]+a

t[i]        t[i+1]

pi'(s)

A=2a

A=2a

s

# FIG.13

ds/dT

STEPPED VELOCITY CURVE
(INTERVENING VARIABLE VELOCITY
UPPER LIMIT FUNCTION)

ACCELERATION/DECELERATION CURVE

T

ACCELERATION REGION

DECELERATION REGION

# FIG.14

(s2,f2,t2,a2)

ts4

TARGET POINT

ts3

ts2

FINAL POINT

ts1

(s1,f1,t1,a1)

# FIG.15

(s2,f2,t2,a2)

FINAL POINT

ts6

ts7

ts5

TARGET POINT

(s1,f1,t1,a1)

# FIG.16

(s2,f2,t2,a2)

FINAL POINT

ts9

TARGET POINT

ts8

(s1,f1,t1,a1)

# FIG.17

(s2,f2,t2,a2)

ts12

TARGET POINT

ts11

FINAL POINT

ts10

(s1,f1,t1,a1)

# FIG.18

(s2,f2)

FINAL POINT

TARGET POINT

ts13

(s1,f1,t1,a1)

# FIG.19

(s2,f2,....)

TARGET POINT

FINAL POINT

(s1,f1,t1,a1)

# FIG.20

FINAL POINT (s2,f2)

(s1,f1,t1,a1) TARGET POINT

| INTERNATIONAL SEARCH REPORT | International application No. |
|---|---|
| | PCT/JP2012/004799 |

**A.  CLASSIFICATION OF SUBJECT MATTER**
*G05B19/4103*(2006.01)i, *G05B19/416*(2006.01)i

According to International Patent Classification (IPC) or to both national classification and IPC

**B.  FIELDS SEARCHED**

Minimum documentation searched (classification system followed by classification symbols)
G05B19/18-19/46, B23Q15/00-15/28

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| A | JP 2001-216008 A  (Mitsubishi Electric Corp.), 10 August 2001 (10.08.2001), entire text; all drawings (Family: none) | 1-6 |
| A | JP 2008-225825 A  (Shin Nippon Koki Co., Ltd.), 25 September 2008 (25.09.2008), entire text; all drawings (Family: none) | 1-6 |
| A | WO 2010/032284 A1  (Shin Nippon Koki Co., Ltd.), 25 March 2010 (25.03.2010), entire text; all drawings & EP 2336839 A1 | 1-6 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 October, 2012 (12.10.12) | 23 October, 2012 (23.10.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2012/004799 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2010-182157 A  (Shin Nippon Koki Co., Ltd.), 19 August 2010 (19.08.2010), entire text; all drawings (Family: none) | 1-6 |
| A | JP 2010-140312 A  (Fanuc Ltd.), 24 June 2010 (24.06.2010), entire text; all drawings (Family: none) | 1-6 |
| A | JP 06-019528 A  (Sony Corp.), 28 January 1994 (28.01.1994), entire text; all drawings (Family: none) | 1-6 |
| A | JP 11-282517 A  (International Business Machines Corp.), 15 October 1999 (15.10.1999), entire text; all drawings & US 6054830 A | 1-6 |
| P,A | JP 2012-032960 A  (Shin Nippon Koki Co., Ltd.), 16 February 2012 (16.02.2012), entire text; all drawings & WO 2012/014479 A1 | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008225825 A
- JP 2010140312 A
- JP 2010182157 A